# EUROPÄISCHE PATENTSCHRIFT

(11) **EP 4 353 906 B1**
(45) Veröffentlichungstag und Bekanntmachung des Hinweises auf die Patenterteilung: **06.08.2025**
(21) Anmeldenummer: 23202721.9
(22) Anmeldetag: 10.10.2023
(51) Int. Cl.: E01C 19/26, B60W 30/18

(54) **VERFAHREN ZUM ABBREMSEN EINER VERDICHTUNGSMASCHINE UND VERDICHTUNGSMASCHINE**
METHOD FOR BRAKING A COMPACTION MACHINE AND COMPACTION MACHINE
PROCÉDÉ DE FREINAGE D'UNE MACHINE DE COMPACTAGE ET MACHINE DE COMPACTAGE

(30) Priorität: 12.10.2022 DE 102022210736
(43) Veröffentlichungstag der Anmeldung: 17.04.2024
(73) Patentinhaber: BOMAG GmbH, 56154 Boppard (DE)
(72) Erfinder: Delzeit, Alexander, 56154 Boppard (DE)
(74) Vertreter: Zimmermann & Partner Patentanwälte mbB

(56) Entgegenhaltungen:
- WO-A1-2013/083234
- WO-A1-2019/154772
- DE-A1- 102007 037 357
- DE-A1- 102011 055 178
- DE-A1- 102012 111 296
- DE-A1- 102014 111 824
- DE-A1- 102019 209 266
- DE-A1- 2 448 723

## Beschreibung

Die Erfindung betrifft ein Verfahren zum Abbremsen einer mittels eines Elektromotors betriebenen Verdichtungsmaschine mit einem Hydrauliksystem, insbesondere Tandemwalze, Walzenzug oder Müllverdichter. Darüber hinaus betrifft die Erfindung eine derartige Verdichtungsmaschine zur Durchführung des Verfahrens.

Gattungsgemäße Verdichtungsmaschinen sind beispielsweise als Straßenwalzen, insbesondere Tandemwalzen, Gummiradwalzen oder Walzenzüge, ausgebildet. Sie werden im Straßen- und Wegebau zum Verdichten des Untergrundes beziehungsweise eines Bodens, beispielsweise Asphaltschichten oder Erdboden, eingesetzt. Dafür weisen die Verdichtungsmaschinen typischerweise Verdichtungsbandagen auf, die beispielsweise als Walzenbandagen mit einem hohlzylindrischen Grundkörper ausgebildet sind und mit denen sich die Verdichtungsmaschinen über den Boden bewegen. Derartige Verdichtungsbandagen können beispielsweise ebenfalls von einem Schwingungserreger in Schwingungen versetzt werden, um so Einfluss auf die Verdichtung zu nehmen und über eine rein statische Verdichtung hinaus eine dynamische Verdichtung zu ermöglichen. Es ist auch möglich, dass eine Verdichtungsbandage in Kombination mit Rädern, insbesondere Gummirädern, oder anderen Fahrwerken eingesetzt wird. Darüber hinaus sind Verdichtungsmaschinen bekannt, die nur Räder aufweisen, beispielsweise sogenannte Gummiradwalzen, die ebenfalls im Straßenbau eingesetzt werden. Ferner sind sogenannte Müllverdichter zur Verdichtung von Mülldeponien bekannt, die zur Bodenverdichtung bandagenähnliche Radeinrichtungen aufweisen. Die gattungsgemäßen Verdichtungsmaschinen sind üblicherweise selbstfahrend ausgebildet und umfassen einen Antriebsmotor, der typischerweise ein Verbrennungsmotor, beispielsweise ein Dieselverbrennungsmotor, ist. Ein verbreitetes Antriebskonzept für solche Verdichtungsmaschinen besteht darin, dass der Antriebsmotor ein Hydrauliksystem bzw. eine oder mehrere Hydraulikpumpen der Verdichtungsmaschine antreibt, die wiederum hydraulische Antriebsenergie an hydraulische Fahrmotoren an den Rädern beziehungsweise Verdichtungsbandagen über ein geeignetes Leitungssystem liefern. Die für den Fahrantriebshydraulikkreislauf zuständige Hydraulikpumpe wird auch als Fahrpumpe bezeichnet. Im Bereich der Verdichtungsmaschinen kommen als Alternative zu einem Verbrennungsmotor als Primärantriebsaggregat verstärkt Elektromotoren zum Einsatz. In diesem Fall wird das Hydrauliksystem der Verdichtungsmaschine typischerweise vom Elektromotor angetrieben.

Beim Einsatz eines Verbrennungsmotors, beispielsweise Dieselmotors, stellt dieser jederzeit im Betrieb ein Stützmoment zur Verfügung beziehungsweise baut dieses auf, sodass dieses Moment verlässlich zum Abbremsen der Verdichtungsmaschine nutzbar ist. Beim Bremsen oder während einer Gefällefahrt wirken die hydraulischen Fahrmotoren der Verdichtungsmaschine als Pumpen, sodass ein an den Fahrmotoren anliegendes Drehmoment auf die Fahrpumpe übertragen wird, die dann als Motor wirkt. Das Stützmoment des Verbrennungsmotors wird bei solchen Verdichtungsmaschinen im praktischen Einsatz dafür genutzt, dieses an der Fahrpumpe anliegende Drehmoment abzustützen, wodurch die Verdichtungsmaschine insgesamt abgebremst wird. Dieser Effekt wird gemeinhin auch als "Motorbremse" bezeichnet. Eine Herausforderung beim Umstieg vom Verbrennungsmotoreinsatz zu einer elektromotorisch betriebenen Verdichtungsmaschine liegt darin, dass es über einen Elektromotor nicht möglich ist, verlässlich ein Stützmoment beziehungsweise Bremsmoment aufzubauen, welches zum Abbremsen der Verdichtungsmaschine eingesetzt werden kann. So kann es beispielsweise in Abhängigkeit vom Ladezustand der Batterie oder auch in Abhängigkeit von der Leistungsreduktion des Elektromotors und/oder des Inverters zu reduzierten Stützmomenten kommen. Dies wiederum wirkt sich negativ auf das Bremsverhalten der Verdichtungsmaschine aus und kann gegebenenfalls zu Gefahren und Sicherheitsrisiken führen. Zudem kann es aufgrund des deutlich reduzierten Massenträgheitsmomentes des Elektromotors im Vergleich zu Verbrennungsmotoren zu hohen Überdrehzahlen am Elektromotor kommen, so dass bei unveränderter hydraulischer Übersetzung im Fahrantrieb eine Steigerung der Fahrgeschwindigkeit auftritt und hierdurch maximal zulässige Drehzahlen von Hydraulikkomponenten überschritten werden. Darüber hinaus kann es insbesondere bei starkem oder sich häufig wiederholendem Bremsen dazu kommen, dass der Elektromotor, der Inverter und/oder die Batterie, insbesondere aufgrund einer Einspeisung elektrischer Energie durch Rekuperation, überhitzen. Dies kann so weit gehen, dass die Verdichtungsmaschine vorsorglich den Betrieb einstellen muss oder deren Komponenten beschädigt werden. DE 10 2019 209 266 A1 offenbart einen hydrostatischen Fahrantrieb mit einer Bremsventilanordnung mit einer als Sitzventil ausgebildeten Hauptstufe. Die Öffnung des Sitzventils kann über ein Vorsteuerventil in Abhängigkeit von dessen Ansteuerstrom einstellbar sein. Der hydrostatische Fahrantrieb kann ein Steuergerät aufweisen, in dem ein Kennfeld oder eine Funktionsgleichung der Bremsventilanordnung abgelegt ist, in dem ein Zusammenhang zwischen dem Ansteuerstrom, dem Eingangsdruck und einem Volumenstrom durch die Hauptstufe abgebildet ist. DE 10 2012 111 296 A1 betrifft einen Antriebsstrang eines verbrennungsmotorisch angetriebenen Fahrzeugs mit einem über ein Ladeventil füllbaren Druckmittelspeicher. Dieses Ladeventil kann als Retarderventil genutzt werden. Für das Bremssystem der DE 10 2007 037 357 A1 ist es beim Einsatz eines Elektromotors vorgesehen, dass der Antrieb abhängig von der Temperatur einer charakteristischen Baugruppe, beispielsweise einem Gehäuse oder Umrichter, bis zu einem Temperaturgrenzwert von einer Antriebssteuerung gesteuert wird. Wird dieser Temperaturgrenzwert überschritten, wird der Antrieb selbst von der Antriebssteuerung als aktive Antriebsbremse zugeschaltet. Es kann ferner vorgesehen sein, dass eine Bremswirkung von einer Steuerung auf eine herkömmliche und eine Antriebsbremse in Stufen oder stufenlos verteilt wird. Dies kann in Abhängigkeit von der Intensität des Bremsbefehls, d.h. der Geschwindigkeit und der Stärke des Bremsbefehls und gegebenenfalls abhängig von der Funktionsbereitschaft der herkömmlichen Bremsanlage oder der Antriebsbremse erfolgen.

Es ist daher die Aufgabe der vorliegenden Erfindung, eine Möglichkeit anzugeben, bei einer über einen Elektromotor angetriebenen und einen hydraulischen oder elektrischen Fahrantrieb aufweisenden Verdichtungsmaschine ein zuverlässiges, effizientes und sicheres Abbremsen zu ermöglichen.

Die Lösung der Aufgabe gelingt mit einem Verfahren sowie mit einer Verdichtungsmaschine gemäß den unabhängigen Ansprüchen. Bevorzugte Weiterbildungen sind in den abhängigen Ansprüchen angegeben.

Ein Aspekt der Erfindung betrifft somit ein Verfahren zum Abbremsen einer mittels eines Elektromotors betriebenen Verdichtungsmaschine, insbesondere einer Tandemwalze, einem Walzenzug, einer Gummiradwalze oder einem Müllverdichter. Das erfindungsgemäße Verfahren kann beispielsweise zumindest teilweise von einer, insbesondere elektronischen, Steuereinrichtung der Verdichtungsmaschine ausgeführt werden. Die Steuereinrichtung kann Teil eines Bordcomputers der Verdichtungsmaschine sein oder sie ist der Bordcomputer. Dass die Verdichtungsmaschine mittels eines Elektromotors betrieben wird, bedeutet, dass der Elektromotor beispielsweise die primäre Antriebsquelle der Verdichtungsmaschine ist. Der Elektromotor kann somit Antriebsenergie zur Verfügung stellen, die zum Betrieb der Verdichtungsmaschine, insbesondere zum Fahrbetrieb, eingesetzt wird. Der Elektromotor kann insbesondere die einzige, ausschließliche Primärantriebsquelle der Verdichtungsmaschine darstellen. Die zur Energieversorgung des Elektromotors erforderliche elektrische Energie kann über einen geeigneten Energiespeicher, beispielsweise eine Batterie, bereitgestellt werden. Es ist jedoch auch möglich, hierzu auf ein elektrische Energie erzeugendes Aggregat, beispielsweise eine Brennstoffzelle oder einen Verbrennungsmotor und/oder einen Generator, zurückzugreifen. Der Generator wiederum kann beispielsweise von einem Verbrennungsmotor angetrieben werden, wobei der Verbrennungsmotor allerdings nicht direkt mechanisch mit dem Fahrantriebsstrang der Verdichtungsmaschine verbunden ist. Ist ein Verbrennungsmotor als Primärantriebsaggregat vorhanden, erfolgt somit von diesem Verbrennungsmotor ausgehend abtriebsseitig zunächst wenigstens eine Umwandlung der durch diesen erzeugten mechanischen Energie, direkt oder indirekt, in elektrische Energie, die wiederum zumindest auch zum Antrieb des hydraulischen Fahrantriebs genutzt wird. Abgesehen von elektrischen Komponenten, die wie der Elektromotor aus einer elektrischen Energiequelle, beispielsweise einer Batterie, versorgt werden, werden bevorzugt sämtliche mechanisch oder hydraulisch angetriebenen Fahrantriebs- und/oder Verdichtungskomponenten der Verdichtungsmaschine vom Elektromotor oder einem anderen elektrischen Antrieb angetrieben. Der Elektromotor kann somit in einer bevorzugten Ausführungsform einen bisher üblicherweise genutzten Verbrennungsmotor als Primärantriebsquelle ersetzen. Die erfindungsgemäße Verdichtungsmaschine ist daher auch mit anderen Worten bevorzugt gänzlich verbrennungsmotorfrei, insbesondere als Fahrantriebsmotor, oder abtriebsseitig eines Elektromotors mit einem "verbrennungsmotorfreien Fahrantrieb" ausgebildet. Das elektromotorische Antreiben der Verdichtungsmaschine, insbesondere des Fahrantriebs, kann indirekt elektromotorisch erfolgen, beispielsweise indem vom Elektromotor eine Hydraulikpumpe angetrieben wird, die wiederum über einen geeigneten Hydraulikkreislauf Hydraulikfluid zu einem Hydraulikmotor leitet, der wiederum den Fahrmotor bildet. Es kann aber auch vorgesehen sein, dass das elektromotorische Antreiben der Verdichtungsmaschine direkt erfolgt, in dem der Fahrantrieb der Fahreinrichtungen, wie beispielsweise Bandagen und/oder Gummiräder, von einem Fahrelektromotor durchgeführt wird.

Hiervon ausgehend ist es für das erfindungsgemäße Verfahren zum Abbremsen einer mittels eines Elektromotors wenigstens teilweise betriebenen Verdichtungsmaschine, insbesondere Tandemwalze, Walzenzug, Gummiradwalze oder Müllverdichter, vorgesehen, dass die Schritte (direktes oder indirektes) elektromotorisches Antreiben einer Fahreinrichtung, Bestimmen eines Ist-Werts eines Betriebsparameters, Bestimmen eines Soll-Werts des Betriebsparameters, Vergleichen des Ist-Wertes des Betriebsparameters mit dem Soll-Wert des Betriebsparameters; Erzeugen eines Bremsmomentes durch eine hydraulische Drossel in einem Bremshydraulikkreislauf, wobei der Bremshydraulikkreislauf eine Bremshydraulikpumpe umfasst, falls der Ist-Wert des Betriebsparameters von dem Soll-Wert abweicht, insbesondere größer ist als der Soll-Wert des Betriebsparameters, wobei die Drossel in einer Hydraulikleitung mit einer Hydraulikpumpe angeordnet ist; und Übertragen des Bremsmomentes über eine mechanische Kopplung von der Bremshydraulikpumpe auf eine die Fahreinrichtung direkt oder indirekt antreibende Einrichtung. Einzelheiten zu einzelnen Schritten werden nachstehend noch näher erläutert. Wesentlich ist, dass mit Hilfe des Bremshydraulikkreislaufes und der Drossel, deren Strömungsquerschnitt idealerweise von der Steuereinrichtung verstellbar ist, eine Art Stützmoment erzeugt werden kann, welches letztlich über die mechanische Kopplung auf eine die Fahreinrichtung direkt oder indirekt antreibende Einrichtung und damit letztendlich auf die Fahreinrichtung übertragbar ist. Unter einer die Fahreinrichtung direkt antreibenden Einrichtung wird beispielsweise ein Elektromotor verstanden, der über einen rein mechanischen Antriebsstrang oder unmittelbar über eine Welle eine Drehbewegung wenigstens einer der Fahreinrichtungen antreibt. Unter einer die Fahreinrichtung indirekt antreibenden Einrichtung wird beispielsweise ein Elektromotor verstanden, der über wenigstens zwei Energieumwandlungsschritte, insbesondere von elektrisch zu hydraulisch und anschließend von hydraulisch zu mechanisch, wenigstens eine der Fahreinrichtungen antreibt. Die hydraulische Drossel ist bevorzugt derart ausgebildet, dass sie innerhalb eines Verstellbereiches bezüglich ihres Öffnungsquerschnitts stufenlos verstellbar ist. Dazu kann es insbesondere vorgesehen sein, dass die hydraulische Drossel als ein Proportionalventil ausgebildet ist.

Das erfindungsgemäße Verfahren umfasst somit das Bestimmen bzw. Ermitteln eines Ist-Werts eines Betriebsparameters. Bei dem Betriebsparameter handelt es sich erfindungsgemäß wenigstens um eine Fahrgeschwindigkeit der Verdichtungsmaschine. Beispielsweise können die Ist-Werte von einem oder mehreren Drehzahlsensoren am Elektromotor und/oder wenigstens eines Fahrmotors eines Fahrantriebshydraulikkreislaufs aufgenommen werden. Es kann vorgesehen sein, dass entsprechende Drehzahlsensoren an einer Walzenbandage oder an einem Rad oder an allen Walzenbandagen und/oder allen Rädern vorhanden sind. Die Bestimmung der Fahrgeschwindigkeit kann alternativ beispielsweise auch durch eine, insbesondere optische, Abtastung des Bodens erfolgen, beispielsweise über eine Kamera. Ganz konkret können hierzu über Bildvergleiche zeitlich nacheinander aufgenommener Bilder in einem Zeitintervall zurückgelegte Wegstrecken ermittelt und dadurch eine Bewegungs- bzw. Fahrgeschwindigkeit berechnet werden. Ergänzend zur Fahrgeschwindigkeit der Verdichtungsmaschine als Betriebsparameter kann der Betriebsparameter beispielsweise eine Drehzahl des Elektromotors sein. Hierbei handelt es sich um die Drehzahl des die Fahrpumpe antreibenden Elektromotors. Wiederum ergänzend oder alternativ kann es sich bei dem Betriebsparameter auch um eine Temperatur, beispielsweise des Elektromotors und/oder eines Umrichters beziehungsweise Inverters und/oder einer Batterie handeln. Hierbei können Temperatursensoren am Elektromotor und/oder am Umrichter beziehungsweise am Inverter und/oder an der Batterie vorgesehen sein. Alternativ oder ergänzend kann es sich beim Betriebsparameter auch um den Ladezustand der Batterie handeln, wofür ein Ladezustandssensor vorgesehen sein kann. Weiter ergänzend oder alternativ kann der Betriebsparameter ebenfalls eine Stromstärke durch den Elektromotor und/oder den Umrichter beziehungsweise Inverter sein. Hierfür kann an geeigneter Stelle ein Amperemeter angeordnet sein. Schließlich kann der Betriebsparameter ergänzend oder alternativ auch ein Drehmoment am Elektromotor sein, welches beispielsweise durch einen Drehmomentsensor am Elektromotor bestimmbar ist. Alternativ kann es sich bei dem Betriebsparameter auch um einen oder mehrere mit jeweils einem der genannten Parameter direkt oder indirekt korrelierenden Parameter oder um eine Kombination von wenigstens zwei der genannten Parameter und/oder korrelierenden Parameter handeln. Die jeweiligen Ist-Werte werden an die Steuereinrichtung weitergeleitet. Der oder die Sensoren stehen mit der Steuereinrichtung zur Übermittlung von IstWerten beziehungsweise Ist-Messwerten somit in Signalübertragungsverbindung. Dies kann, wie auch die nachstehend erwähnten Verbindungen zur Signalübertragung, kabelgebunden oder auch kabellos erfolgen.

Darüber hinaus umfasst das erfindungsgemäße Verfahren das Bestimmen bzw. Festlegen eines Soll-Wertes für den oder die Betriebsparameter. Diese Werte, insbesondere für die Drehzahl des Elektromotors und die Fahrgeschwindigkeit der Verdichtungsmaschine, können beispielsweise direkt oder indirekt aus der Stellposition und/oder einer Stellpositionsänderung eines Fahrhebels oder aus einer anderen Steuereingabe durch einen Bediener, beispielsweise an der Steuereinrichtung, abgelesen werden. Gegebenenfalls können entsprechende Sollwerte auch aus dem aktuellen Betriebszustand der Verdichtungsmaschine abgeleitet werden, beispielsweise wenn für den Arbeitsbetrieb der Verdichtungsmaschine gewünschte Drehzahlen oder Fahrgeschwindigkeiten vorgegeben sind, so dass die Steuereinrichtung auf die jeweiligen Sollwerte aus einem aktuellen Betriebszustand rückschließen kann. Soll-Werte für die Temperatur der verschiedenen genannten Komponenten sowie für den Ladungszustand der Batterie und die Stromstärke durch den Elektromotor oder den Umrichter sowie für das Drehmoment am Elektromotor können sich insbesondere ebenfalls aus Überlegungen oder Vorschriften zur Betriebssicherheit und/oder Herstellervorgaben ergeben. So müssen diese Werte beispielsweise in einem für den andauernden Betrieb der Verdichtungsmaschine als sicher geltenden Bereich gehalten werden. Dieser Bereich kann je nach der baulichen Beschaffenheit der Komponenten variieren. Das Festlegen von geeigneten konkreten Soll-Werten für diese Parameter hängt somit von einer Vielzahl individueller Faktoren ab und liegt im Wissen und Können des jeweils zuständigen Fachmanns.

Auf Grundlage des ermittelten Ist-Werts und des festgelegten Soll-Werts erfolgt ein Vergleichen des Ist-Werts mit dem Soll-Wert. Insbesondere ermittelt die Steuereinrichtung in diesem Schritt Betriebszustände, in denen die Ist-Werte von den Sollwerten abweichen, insbesondere die Ist-Werte die Sollwerte überschreiten. Dies kann beispielsweise dann auftreten, wenn die Verdichtungsmaschine aufgrund von Außenfaktoren ungewollt beschleunigt, beispielsweise, weil diese sich gerade entlang einer abfallenden Wegstrecke bewegt. Ergänzend oder alternativ kann der Soll-Wert auch unter den Ist-Wert reduziert werden, indem ein Bediener beispielsweise einen Fahrhebel betätigt und die vorgegebene, einzustellende Fahrgeschwindigkeit (die dem Soll-Wert entspricht) reduziert. Darüber hinaus kann das Betätigen einer Bremse durch einen Bediener eine gegenüber der Ist-Drehzahl beziehungsweise der Ist-Fahrgeschwindigkeit verringerte Soll-Drehzahl beziehungsweise Soll-Fahrgeschwindigkeit signalisieren. Eine erhöhte Temperatur des Elektromotors, des Umrichters beziehungsweise Inverters oder der Batterie zeigt an, dass diese Komponenten beispielsweise beim Bremsen zu stark belastet werden, weshalb es notwendig ist, die Bremsleistung aus anderen Komponenten zu beziehen. Ist der Ladezustand der Batterie zu groß, so kann diese beispielsweise die beim Bremsen anfallende, aus einer Rekuperation stammende, elektrische Energie nicht aufnehmen, weshalb der Betrieb des Elektromotors als Generator in diesem Fall ebenfalls nicht zum Bremsen geeignet ist. Dasselbe gilt für die Stromstärke durch den Elektromotor beziehungsweise den Umrichter und das Drehmoment am Elektromotor. Sind diese zu hoch, muss Bremsleistung aus anderen Komponenten bezogen werden. Die erfindungsgemäß im Vordergrund stehende Betriebssituation ist demnach dann gegeben, wenn der Ist-Wert größer ist als der Soll-Wert und somit der Ist-Wert gesenkt werden soll. In diesem Fall kann sich die Verdichtungsmaschine in einem Schubbetrieb befinden. Dies bedeutet, dass beispielsweise Fahrmotoren eines Fahrantriebshydraulikkreislaufs durch ihre mechanische Kopplung mit den Verdichterbandagen beziehungsweise Rädern der Verdichtungsmaschine in Rotation gehalten werden bzw. dann von diesen angetrieben werden und demnach als Pumpen wirken. Das dann in dem dann vorhandenen Fahrantriebskreislauf geförderte Hydraulikfluid kann über das Leitungssystem eines Fahrantriebshydraulikkreislaufes zur Fahrpumpe geleitet werden, die in dieser Betriebssituation dann als Motor wirkt. Der Fahrantriebshydraulikkreislauf und weitere Teile des mit der Fahrpumpe verbundenen Antriebsstranges der Verdichtungsmaschine, inklusive beispielsweise einer Lenk-Speisepumpe, werden dann im Schubbetrieb mitgeschleppt. Wie eingangs erwähnt, weist die erfindungsgemäße Verdichtungsmaschine bevorzugt ausschließlich den Elektromotor und keinen Verbrennungsmotor als Fahrantrieb auf. Ein üblicherweise vom Verbrennungsmotor zuverlässig bereitgestelltes Stützmoment, über welches das entsprechende Drehmoment an der im Schubbetrieb als Motor wirkenden Fahrpumpe gegengehalten beziehungsweise gestützt werden könnte, ist daher erfindungsgemäß nicht vorhanden und kann auch nicht zuverlässig vom Elektromotor bereitgestellt werden.

In einer besonders bevorzugten Ausführungsform der Erfindung umfasst das Hydrauliksystem der Verdichtungsmaschine einen Fahrantriebshydraulikkreislauf, der wenigstens eine Fahrpumpe aufweist, die vom Elektromotor antreibbar ist. Die Fahrpumpe versorgt Fahrmotoren des Fahrantriebshydraulikkreislaufes mit Hydraulikfluid, sodass die Fahrmotoren die Rotation der Verdichtungsbandagen beziehungsweise Räder der Verdichtungsmaschine, antreiben und sich diese so über den zu verdichtenden Boden bewegt. Die Fahrpumpe wird dabei explizit nicht mechanisch von einem eventuell zum Betrieb eines Generators vorhandenen Verbrennungsmotor angetrieben, sondern, insbesondere ausschließlich, vom Elektromotor. Das erfindungsgemäße Verfahren umfasst dann entsprechend vorzugsweise ein Antreiben einer Fahrpumpe in einem Fahrantriebshydraulikkreislauf der Verdichtungsmaschine durch den Elektromotor. Der Fahrantriebshydraulikkreislauf ist bevorzugt als geschlossener Hydraulikkreislauf ausgebildet. Die Fahrpumpe ist bevorzugt als Pumpe mit variablem Fördervolumen ausgebildet, um beispielsweise die Fahrgeschwindigkeit und/oder das verfügbare Fahrantriebsdrehmoment der Verdichtungsmaschine variieren zu können. Dazu kann die Fahrpumpe drehzahlvariabel sein und/oder als Verstellpumpe mit variablem Schluckvolumen ausgebildet sein. Ergänzend oder alternativ ist es auch möglich, den von der Fahrpumpe angetriebenen Fahrhydraulikmotor als Verstellmotor mit variablem Schluckvolumen auszubilden.

In dieser bevorzugten Ausführungsform kann das erfindungsgemäße Verfahren besonders ein Antreiben einer Lenk-Speisepumpe in einem Lenkhydraulikkreislauf der Verdichtungsmaschine, beispielsweise ebenfalls durch den Elektromotor oder einen weiteren Elektromotor beziehungsweise elektrischen Antrieb, umfassen. Beispielsweise kann die Pumpe selbst einen elektrischen Antrieb aufweisen. Ergänzend oder alternativ kann die Lenk-Speisepumpe von demselben Elektromotor angetrieben werden, der auch die Fahrpumpe antreibt. Die beiden Pumpen können in diesem Fall in einer Tandemanordnung angeordnet sein. Die Lenk-Speisepumpe versorgt den Lenkhydraulikkreislauf mit hydraulischer Energie. Im Lenkhydraulikkreislauf wiederum ist eine Lenkeinrichtung angeordnet. Hierbei kann es sich um ein, insbesondere ein- oder mehrstufiges, Lenkorbitrol handeln. Im Gegensatz zur Fahrpumpe ist die Lenk-Speisepumpe bevorzugt als Konstantpumpe, beispielsweise als Zahnradpumpe, ausgebildet. Auf diese Weise ist sichergestellt, dass die Lenkeinrichtung durchgehend mit Hydraulikfluid versorgt wird, sodass in sämtlichen Betriebssituationen eine zuverlässige Lenkung möglich ist. Neben der Versorgung des Lenkhydraulikkreislaufes ist es erfindungsgemäß vorgesehen, dass die Lenk-Speisepumpe ebenfalls Hydraulikfluid in den Fahrantriebshydraulikkreislauf einspeist. Auf diese Weise können Hydraulikfluidverluste im Fahrantriebshydraulikkreislauf ausgeglichen werden. Die Lenk-Speisepumpe ist daher eine einzige Pumpe, die in Doppelfunktion sowohl als Lenkpumpe für den Lenkhydraulikkreislauf als auch gleichzeitig als Speisepumpe für den Fahrantriebshydraulikkreislauf dient. Diese kann als Konstantpumpe aber auch als Verstellpumpe ausgeführt werden. Dieser Lenkhydraulikkreislauf ist dann der Bremshydraulikkreislauf. Schließlich kann es für diese bevorzugte Weiterbildung ebenfalls vorgesehen sein, , dass die Lenk-Speisepumpe über eine mechanische Kopplung, insbesondere über eine Welle direkt, mit der Fahrpumpe gekoppelt ist. Beispielsweise sind die Fahrpumpe und die Lenk-Speisepumpe beide mit einer gemeinsamen Abtriebswelle des Elektromotors wirkverbunden, die dazu beispielsweise als Durchtrieb ausgebildet sein kann, oder es wird eine vom Elektromotor separate mechanische Kopplung vorgesehen. Auch eine Kopplung über ein Getriebe ist möglich, solange eine mechanische Kopplung zwischen den beiden Pumpen aufrecht erhalten bleibt. Durch die mechanische Koppelung zwischen der Fahrpumpe und der Lenk-Speisepumpe kann ein Drehmoment zwischen diesen beiden Pumpen übertragen werden. Das erfindungsgemäße Verfahren umfasst mit anderen Worten somit auch ein Übertragen von Drehmomentkräften zwischen der Fahrpumpe und der Lenk-Speisepumpe über eine, insbesondere direkte, mechanische Kopplung dieser beiden Pumpen miteinander. In diesem konkreten Fall ist dann die Lenk-Speisepumpe die Bremshydraulikpumpe.

Für die vorstehend beschriebenen Fallkonstellationen, insbesondere, dass der Ist-Wert des Betriebsparameters größer ist als der Soll-Wert, ist erfindungsgemäß ein Erzeugen eines Bremsmomentes an der Bremshydraulikpumpe, beispielsweise der Lenk-Speisepumpe, vorgesehen. Dies erfolgt zunächst durch eine im Bremshydraulikkreislauf angeordnete hydraulische Drossel, die in einer Hydraulikleitung zwischen der Bremshydraulikpumpe, insbesondere Lenk-Speisepumpe, und einem stromabwärts der Bremshydraulikpumpe vorhandenen Tankauslass angeordnet ist. Es kann vorgesehen sein, dass in diesem Bremshydraulikkreislauf andere Komponenten angeordnet sind und/oder von diesem versorgt werden, wie beispielsweise die Lenkeinrichtung, beispielsweise dem Lenkorbitrol, welches im Lenkhydraulikkreislauf angeordnet sein kann. Der Lenkhydraulikkreislauf bildet in diesem Fall somit wenigstens teilweise gleichzeitig auch den Bremshydraulikkreislauf.

Beispielsweise kann die Drossel als Proportional-Druckbegrenzungsventil ausgebildet, das insbesondere von der Steuereinrichtung gesteuert wird. Durch die Ansteuerung der Drossel kann die Steuereinrichtung im Rahmen systembedingter Grenzen einen nahezu beliebigen Druckabfall an der hydraulischen Drossel einstellen. Auf diese Weise kann ein Staudruck stromabwärts der Bremshydraulikpumpe, insbesondere Lenkspeisepumpe, erzeugt bzw. geregelt bzw. eine Strömungswiderstand stromabwärts der Bremshydraulikpumpe geregelt werden, gegen den dieselbe pumpt. Es wird an dieser Stelle mit anderen Worten ein Bremsmoment erzeugt. Aufgrund des definierten Arbeitsvolumens der Bremshydraulikpumpe, insbesondere Lenkspeisepumpe, bzw. des definierten Fördervolumens der Bremshydraulikpumpe, insbesondere Lenkspeisepumpe, bei konstanter Drehzahl kann dieser Staudruck im Bremshydraulikkreislauf, insbesondere Lenkhydraulikkreislauf, in der vorliegenden Anordnung zur Erzeugung eines Stützmomentes beispielsweise an der Fahrpumpe und damit als Bremsmoment für die Maschine genutzt werden. Durch die mechanische Kopplung der Bremshydraulikpumpe, insbesondere Lenk-Speisepumpe, mit der Fahrpumpe erfolgt eine mechanische Übertragung vom an der Bremshydraulikpumpe, insbesondere Lenk-Speisepumpe, generierten Bremsmoment im Schubbetrieb der Verdichtungsmaschine, insbesondere direkt, beispielsweise an die Fahrpumpe des Fahrantriebshydraulikkreislaufes und stützt diesen damit ab. Entsprechend kann das erfindungsgemäße Verfahren ein, insbesondere direktes, Übertragen des Bremsmomentes von der Lenk-Speisepumpe über die mechanische Kopplung auf die Fahrpumpe des Fahrantriebshydraulikkreislaufs bzw. allgemeiner von der Bremshydraulikpumpe auf eine wenigstens eine der Fahreinrichtungen direkt oder indirekt antreibende Einrichtung, insbesondere einen Elektromotor, ermöglichen. Der Betrag des bereitgestellten Bremsmomentes kann beispielsweise über eine Veränderung des Durchströmungsquerschnittes bzw. des Druckabfalls über die Drossel durch die Steuereinrichtung nahezu beliebig und stufenlos eingestellt werden. Konkret ist es hierfür beispielsweise möglich, durch eine entsprechende Bestromung der Drossel beziehungsweise des Proportional-Druckbegrenzungsventils eine solche Veränderung des Durchströmungsquerschnittes zu steuern. Der von der Steuereinrichtung eingestellte Wert des Bremsmoments ist vorzugsweise proportional zum Unterschied zwischen dem Ist-Wert und dem Soll-Wert des Betriebsparameters. Die Regelung kann beispielsweise über verschiedene, an sich im Stand der Technik bekannte Reglerstrukturen erreicht werden, beispielsweise über PI-Regler, PID-Regler, zustandsbasierte Regler etc.

Die hydraulische Drossel muss allerdings nicht immer sofort aktiviert werden, wenn der Ist-Wert des Betriebsparameters größer ist als der Soll-Wert. So kann beispielsweise ein Toleranzbereich vorgegeben sein, innerhalb dessen sich der Ist-Wert des Betriebsparameters über dem Soll-Wert befinden kann, ohne dass direkt ein Bremsmoment an der Bremshydraulikpumpe, insbesondere Lenk-Speisepumpe, eingestellt wird. Erst wenn der Ist-Wert des Betriebsparameters den Toleranzbereich, beispielsweise nach oben, verlässt, steuert die Steuereinrichtung die hydraulische Drossel an, um ein Bremsmoment an der Bremshydraulikpumpe, insbesondere Lenk-Speisepumpe, zu generieren. Die Größe des Toleranzbereiches kann fest vorgegeben sein oder dynamisch an die Betriebssituation angepasst werden. Beispielsweise kann die Steuereinrichtung einen den Toleranzbereich definierenden Schwellenwert berechnen, der beispielsweise um einen vorgegebenen Prozentwert, insbesondere 5 % oder 10 % oder 15 % oder 20 % oder 25 % oder 30 % über dem Soll-Wert des Betriebsparameters liegt. Erst beim Überschreiten dieses Schwellenwertes wird dann die Drossel angesteuert, um ein Bremsmoment zu generieren. Ergänzend oder alternativ ist es ebenfalls möglich, eine Toleranzzeit vorzusehen, also eine vorgegebene Zeitspanne, für deren Dauer der Ist-Wert des Betriebsparameters größer sein kann als der Soll-Wert, ohne dass die Steuereinrichtung die Drossel zur Generierung eines Bremsmoments ansteuert. Dasselbe gilt ebenfalls auch für ein Verlassen des Toleranzbereiches, wie vorstehend erläutert. Es kann also ein Toleranzbereich und eine Toleranzzeit zusammen genutzt werden. Es wird also nicht notwendigerweise sofort die Drossel angesteuert, wenn der Ist-Wert des Betriebsparameters größer ist als der Soll-Wert des Betriebsparameters. Vielmehr wird zuerst der Ablauf der Toleranzzeit abgewartet. Erst wenn nach dem Ablauf der Toleranzzeit immer noch die jeweiligen Schwellenwerte überschritten sind, steuert die Steuereinrichtung die Drossel an, um ein Bremsmoment an der Bremshydraulikpumpe, insbesondere Lenk-Speisepumpe, zu generieren. Die Toleranzzeit kann beispielsweise maximal 1 s oder maximal 3 s oder maximal 5 s oder maximal 10 s betragen. Darüber hinaus kann die Toleranzzeit dynamisch je nach der Betriebssituation der Verdichtungsmaschine angepasst werden, beispielsweise in Abhängigkeit des Ist-Wertes des Betriebsparameters. So kann beispielsweise die Toleranzzeit mit steigender Fahrgeschwindigkeit gesenkt werden, um aus hohen Fahrgeschwindigkeiten heraus ein schnelles Reagieren des Gesamtsystems sicherzustellen.

Gemäß einer bevorzugten Ausführungsform kann vorgesehen sein, dass das an der Bremshydraulikpumpe, insbesondere Lenk-Speisepumpe, eingestellte Bremsmoment so lange erhöht wird, wie sich die Differenz zwischen dem Ist-Wert des Betriebsparameters und dem Soll-Wert des Betriebsparameters erhöht, insbesondere proportional zu dieser Differenz. Darüber hinaus muss das Bremsmoment nicht sofort wieder reduziert werden, wenn sich diese Differenz wieder verkleinert. Es ist dagegen bevorzugt vorgesehen, dass nach einer Erhöhung des Bremsmoments, insbesondere proportional zur genannten Differenz, das Bremsmoment konstant gehalten wird, insbesondere auch wenn die Differenz wieder abnimmt. Bevorzugt wird das Bremsmoment beispielsweise so lange konstant gehalten, bis der Ist-Wert des Betriebsparameters wieder auf oder unter den Soll-Wert abgesunken ist, sprich, bis die Differenz null ist. Auf diese Weise wird auch bei starken, ungewollten Beschleunigungen oder anderen Abweichungen von einem optimalen Betrieb der Verdichtungsmaschine entsprechend stark gegengewirkt.

Das erfindungsgemäße Verfahren bringt eine Reihe von Vorteilen mit sich. Es kann beispielsweise ein Bremsmoment für einen Fahrantriebshydraulikkreislauf bereitgestellt werden, ohne dass die hydraulische Drossel dazu im geschlossenen Fahrantriebshydraulikkreislauf angeordnet ist, sondern in einem offenen Lenkhydraulikkreislauf. Die an der Drossel entstehende Wärme im Hydraulikmedium verteilt sich daher auf ein größeres Volumen, auch im Hydrauliktank, und kann darüber hinaus auch einfacher über einen Kühler, der beispielsweise ebenfalls im Lenkhydraulikkreislauf, idealerweise stromabwärts der Drossel und/oder des Lenkorbitrols, angeordnet ist, abgeführt werden. Hierdurch kann auch die Temperatur des Elektromotors, des Umrichters beziehungsweise Inverters und der Batterie gesenkt oder zumindest deren Aufheizung abgeschwächt werden. Durch Berücksichtigung des Ladezustands der Batterie kann eine Überladung vermieden werden. Durch die Nutzung einer hydraulischen Drossel, die von der Steuereinrichtung beliebig angesteuert werden kann, kann innerhalb der Systemgrenzen ein Bremsmoment von nahezu beliebiger gewünschter Größe bereitgestellt werden, wodurch auch der Bremseffekt bzw. die Bremswirkung einstellbar und innerhalb eines vergleichswese großen Wirkungsbereiches variabel ist. Die Erfindung ermöglicht daher ein vergleichsweise langsames Entschleunigen bis hin zu einer schnellen Notbremsung bis zum Stillstand der Verdichtungsmaschine. Darüber hinaus sind alternative Bremsmöglichkeiten, beispielsweise der Einsatz dynamischer Betriebsbremsen, erheblich bauraum- und kostenintensiver. Dadurch, dass die Drossel immer derart gesteuert werden kann, dass ausreichend Hydraulikmedium im Lenkhydraulikkreislauf zirkuliert, ist eine ununterbrochene, ausreichende Versorgung des Lenksystems sichergestellt. Der Einsatz eines oder mehrerer Prioritätsventile, insbesondere im Lenkhydraulikkreislauf, ist daher nicht erforderlich. Durch die Nutzung der Lenk-Speisepumpe, die typischerweise sowieso in Verdichtungsmaschinen vorhanden ist, ist das System darüber hinaus besonders einfach aufgebaut und dadurch kostengünstig.

Die Größe des bereitgestellten Bremsmomentes hängt nicht nur von der Einstellung der Drossel, insbesondere ihres Durchströmungsquerschnittes, ab, sondern auch vom an der Bremshydraulikpumpe, insbesondere Lenkspeisepumpe, anstehenden Hydraulikdruck und vom Fördervolumen der Bremshydraulikpumpe, insbesondere Lenk-Speisepumpe, ab. Es kann daher sinnvoll sein, an dieser Stelle eine Bremshydraulikpumpe, insbesondere Lenk-Speisepumpe, mit veränderbarem Fördervolumen zu verwenden, wobei in der vorliegenden konkreten Anwendung die Verwendung einer Konstantpumpe als Bremshydraulikpumpe, insbesondere Lenk-Speisepumpe, bevorzugt ist. Eine weitere Möglichkeit, das bereitgestellte Bremsmoment zu vergrößern, kann daher auch dadurch erreicht werden, dass während des Übertragens des Bremsmomentes ein Reduzieren eines Schluckvolumens einer Fahrpumpe durchgeführt wird. Die Fahrpumpe ist bevorzugt als Pumpe mit variablem Schluckvolumen ausgebildet und wird beispielsweise ebenfalls von der Steuereinrichtung angesteuert, sodass deren Schluckvolumen von der Steuereinrichtung verstellbar ist. Im Schubbetrieb arbeiten die Fahrmotoren als Pumpen und fördern daher ein bestimmtes Volumen an Hydraulikfluid zur Fahrpumpe. Dieses Hydraulikfluid wird dann durch die Fahrpumpe gefördert und treibt diese an. Wird hierbei das Schluckvolumen der Fahrpumpe reduziert, so erhöht sich die Drehzahl der Fahrpumpe, um den von den Fahrmotoren kommenden, geförderten Volumenstrom umzusetzen. Durch die direkte mechanische Koppelung der Fahrpumpe und der Lenk-Speisepumpe wiederum wird diese erhöhte Drehzahl auf die Lenk-Speisepumpe übertragen, deren Fördervolumen pro Zeit sich dadurch erhöht, woraus wiederum ein erhöhtes Bremsmoment resultiert. Insgesamt kann daher während eines Bremsvorgangs im Schubbetrieb das Bremsmoment erhöht werden, indem das Schluckvolumen der Fahrpumpe reduziert wird.

Bei dem Fahrantriebshydraulikkreislauf und dem Lenkhydraulikkreislauf handelt es sich um separate Hydraulikkreisläufe, zwischen denen Hydraulikfluid im Wesentlichen, wenn überhaupt, nur über einen gemeinsamen Hydraulikfluidtank und gegebenenfalls zusammengeführte Rücklaufleitungen zum Tank ausgetauscht wird. Eine weitere Verbindung zwischen dem Fahrantriebshydraulikkreislauf und dem Lenkhydraulikkreislauf kann allerdings gegebenenfalls lediglich in einer Speiseleitung bestehen, die vom Lenkhydraulikkreislauf abgeht und Hydraulikfluid in den Fahrantriebshydraulikkreislauf einspeist, um insbesondere Leckageverluste im Fahrantriebshydraulikkreislauf auszugleichen. Die Kreisläufe weisen dagegen bevorzugt keine gemeinsamen, jeweils von Ihnen angetriebenen Funktionseinheiten auf und werden daher auch jeweils von einer separaten, für den jeweiligen Hydraulikkreislauf exklusiven, Pumpe betrieben. Für den Fall, dass die Verdichtungsmaschine weitere hydraulische Arbeitseinrichtungen aufweist, beispielsweise einen Schwingungs- oder Vibrationserreger, üblicherweise ein Unwuchterreger, in einer Verdichtungsbandage, ist es bevorzugt vorgesehen, dass zum Betrieb dieser Arbeitseinrichtungen ein weiterer, separater Arbeitshydraulikkreislauf vorgesehen ist. Mit anderen Worten kann es bevorzugt sein, dass das Hydrauliksystem der Verdichtungsmaschine einen von dem Fahrantriebshydraulikkreislauf und dem Lenkhydraulikkreislauf separaten Arbeitshydraulikkreislauf, insbesondere Unwuchtantriebshydraulikkreislauf, umfasst, wobei dieser Arbeitshydraulikkreislauf, bevorzugt ausschließlich, von einer von der Lenk-Speisepumpe separaten Arbeitspumpe betrieben wird. Der Arbeitshydraulikkreislauf ist mit den weiteren Hydraulikkreisläufen der Verdichtungsmaschine daher bevorzugt ebenfalls ausschließlich über den Hydraulikfluidtank und gegebenenfalls zusammengeführte Rücklaufleitungen zum Tank verbunden. Liegen weitere geschlossene Hydraulikkreisläufe vor, können auch diese zum Ausgleich von lediglich Leckageverlusten gespeist werden, auch vom Lenkhydraulikkreislauf. Wesentlich ist, dass der Arbeitshydraulikkreislauf insbesondere vollständig getrennt ist vom Lenkhydraulikkreislauf, sodass auch ohne den Einsatz eines Prioritätsventils immer die durchgehende Versorgung des Lenksystems beziehungsweise einer Lenkeinrichtung mit Hydraulikfluid sichergestellt ist. Die Arbeitspumpe betreibt ausschließlich im Arbeitshydraulikkreislauf angeordnete Arbeitseinrichtungen und betreibt insbesondere keinerlei weitere Funktionseinheiten, die sich in den anderen Hydraulikkreisläufen befinden. Sämtliche genannten Pumpen, also die Fahrpumpe, die Lenk-Speisepumpe und die Arbeitspumpe können vom Elektromotor betrieben werden. Beispielsweise sind die Pumpen auf einer gemeinsamen Welle des Elektromotors angeordnet oder sind über Durchtriebe miteinander verbunden. Zumindest die Fahrpumpe wird immer vom hierin beschriebenen Elektromotor angetrieben, der ebenfalls zur Steuerung des Verfahrens herangezogen wird. Die Lenk-Speisepumpe und die Arbeitspumpe können gegebenenfalls von separaten elektrischen Antrieben, beispielsweise separaten Elektromotoren, angetrieben werden, wobei es bevorzugt ist, dass wenigstens die Lenk-Speisepumpe und die Fahrpumpe von einem gemeinsamen Elektromotor angetrieben werden.

Durch das Bereitstellen eines Bremsmomentes an der Lenk-Speisepumpe nimmt der Lenkhydraulikkreislauf kinetische Energie der Verdichtungsmaschine auf. Hierdurch werden das Hydraulikfluid beziehungsweise Hydrauliköl sowie die weiteren Komponenten des Lenkhydraulikreislaufes aufgeheizt. In einer bevorzugten Ausführungsform der Erfindung ist nun vorgesehen, dass sichergestellt wird, dass durch das Bereitstellen des Bremsmomentes an der Lenk-Speisepumpe der Lenkhydraulikkreislauf nicht zu sehr aufheizt, so dass Komponenten des Lenkhydraulikreislaufes beschädigt werden könnten. Hierfür kann beispielsweise ein Schwellenwert für die Temperatur des Lenkhydraulikreislaufes, insbesondere für die Temperatur des Hydraulikfluids, vorgegeben werden. Bei diesem Schwellenwert handelt es sich beispielsweise um einen Maximalwert, also um eine Temperatur, die nicht überschritten werden soll. Es ist dann bevorzugt vorgesehen, dass ein Bestimmen einer Temperatur im Lenkhydraulikkreislauf, beispielsweise des Hydraulikfluids im Lenkhydraulikreislauf, durchgeführt wird, und dass kein Bremsmoment an der Lenk-Speisepumpe durch die hydraulische Drossel erzeugt wird, wenn die Temperatur im Lenkhydraulikkreislauf größer ist als ein vorgegebener Schwellenwert. Mit anderen Worten wird also überprüft, ob der Lenkhydraulikkreislauf in der Lage ist, kinetische Energie in Form von Wärmeenergie aufzunehmen. Nur wenn dies der Fall ist, sprich, wenn die Temperatur im Lenkhydraulikkreislauf unter dem Schwellenwert liegt, wird erfindungsgemäß ein Bremsmoment an der Lenk-Speisepumpe bereitgestellt. So ist sichergestellt, dass keine Überhitzung des Lenkhydraulikreislaufes und insbesondere der sicherheitsrelevanten Lenkung, eintritt.

Es kann vorteilhaft sein, wenn ein Rücklauf bzw. eine Rücklaufleitung des Lenkhydraulikkreislaufs und ein Rücklauf für Leckagen bzw. eine Leckagerücklaufleitung des Fahrantriebshydraulikkreislaufs zusammengeführt werden und gemeinsam in einen Tank eingeleitet werden. Dadurch können Bauteile und Bauraum eingespart werden, sodass das System insgesamt vereinfacht wird.

Es kann bevorzugt vorgesehen sein, dass beim Übertragen des Bremsmomentes über die mechanische Kopplung von der Bremshydraulikpumpe auf die die Fahreinrichtung direkt oder indirekt antreibende Einrichtung, insbesondere Fahrpumpe oder Fahrmotor, eine Drehzahlübersetzung erfolgt. Auf diese Weise ist ein Anpassung an aktuelle Drehzahlerfordernisse möglich.

Für Weiterbildungen, in denen wenigstens eine der Fahreinrichtungen von einem Fahrhydraulikmotor angetrieben wird, kann es ferner vorgesehen sein, dass der Fahrhydraulikmotor über eine mechanische Kopplung mit einer, insbesondere mit verstellbarem Fördervolumen ausgebildeten, Bremshydraulikpumpe koppelbar ist, wobei die Bremshydraulikpumpe Teil eines vom Fahrantriebshydraulikkreislauf separaten Bremshydraulikkreislaufes ist, und wobei die hydraulische Drossel, insbesondere stromabwärts der Bremshydraulikpumpe, im Bremshydraulikkreislauf angeordnet ist, mit dem Schritt, dass das Erzeugen des Bremsmomentes an der Bremshydraulikpumpe durch die hydraulische Drossel erfolgt, und dass ein Übertragen des Bremsmomentes von der Bremshydraulikpumpe über die mechanische Kopplung auf den Fahrhydraulikmotor des Fahrantriebshydraulikkreislaufs erfolgt. Diese Anordnung kann so stark vereinfacht werden, dass die einzige Funktion des Bremshydraulikkreislaufes und der Bremshydraulikpumpe allein in der situationsabhängigen Erzeugung des zusätzlichen Brems- bzw. Stützmomentes, wie vorstehend beschrieben, besteht.

Grundsätzlich ist es möglich, dass das erfindungsgemäße Verfahren zudem ein Laden eine Hydraulikspeichers in Betriebsphasen umfasst, in denen im Bremshydraulikkreislauf über die Bremshydraulikpumpe ein Bremsmoment erzeugt wird. Diese gespeicherte hydraulische Energie kann später für Funktionen der Verdichtungsmaschine genutzt werden, wie beispielsweise eine Boost-Funktion, Antriebsfunktionen für Zusatzaggregate etc.

Die Lösung der eingangs genannten Aufgabe gelingt ebenfalls mit einer Verdichtungsmaschine, insbesondere einer Tandemwalze, einem Walzenzug oder einem Müllverdichter, mit einem Hydrauliksystem, einem Elektromotor und einer Steuereinrichtung, wobei die Steuereinrichtung zur Durchführung des erfindungsgemäßen Verfahrens ausgebildet ist. Die Steuereinrichtung kann dabei beispielsweise sämtliche am Verfahren beteiligten Komponenten der Verdichtungsmaschine steuerungstechnisch ansteuern. Zumindest das Bestimmen eines Ist-Werts eines Betriebsparameters, das Bestimmen eines Soll-Werts des Betriebsparameters und das Vergleichen des Ist-Werts des Betriebsparameters mit dem Soll-Wert wird von der Steuereinrichtung durchgeführt. Darüber hinaus steuert die Steuereinrichtung insbesondere die Drossel an, um dort das Bremsmoment zu erzeugen. Sämtliche hierin beschriebenen Merkmale, Wirkungen und Vorteile des erfindungsgemäßen Verfahrens gelten im übertragenen Sinne ebenfalls für die erfindungsgemäße Verdichtungsmaschine und umgekehrt. Es wird lediglich zur Vermeidung von Wiederholungen auf die jeweils anderen Ausführungen Bezug genommen.

Die Verdichtungsmaschine kann einen Fahrantriebshydraulikkreislauf mit einer vom Elektromotor angetriebenen Fahrpumpe aufweisen, wobei die Fahrpumpe insbesondere als Verstellpumpe ausgebildet ist, also ein variables beziehungsweise einstellbares Fördervolumen aufweist. Sie wird beispielsweise von einer Abtriebswelle des Elektromotors mechanisch angetrieben. Die mechanische Antriebsverbindung, beispielsweise in Form der Abtriebswelle, zwischen Elektromotor und Fahrantriebspumpe ist idealerweise kupplungsfrei. Die Steuerung der Verstellpumpe und insbesondere die Steuerung des variablen Fördervolumens erfolgt beispielsweise über die Steuereinrichtung. Der Fahrantriebshydraulikkreislauf ist bevorzugt als geschlossener Hydraulikkreislauf ausgebildet. Er weist insbesondere wenigstens einen Fahrmotor an einer Verdichtungsbandage und/oder an einem Rad der Verdichtungsmaschine auf, wobei der Fahrmotor aus dem Volumenstrom der Fahrpumpe ein Drehmoment für die Verdichtungsbandage und/oder das Rad erzeugt. Wenn die Verdichtungsmaschine bremst oder ein Gefälle hinabfährt, sprich, im Schubbetrieb der Verdichtungsmaschine, wird der Fahrmotor über die mechanische Verbindung zur Verdichtungsbandage und/oder zum Rad gedreht und wirkt daher als Pumpe. Durch den geschlossenen Hydraulikkreislauf wird dieses Drehmoment auf die Fahrpumpe übertragen, die als Motor wirkt. Wie bereits beschrieben, ist es der Kern der Erfindung, dieses Drehmoment an der Fahrpumpe durch ein an der Lenk-Speisepumpe erzeugtes Bremsmoment abzustützen.

Hierfür weist die Verdichtungsmaschine bevorzugt eine, insbesondere auch vom Elektromotor angetriebene, Lenk-Speisepumpe in einem Lenkhydraulikkreislauf auf, wobei die Lenk-Speisepumpe insbesondere als Konstantpumpe, also mit konstantem Fördervolumen, beispielsweise als Zahnradpumpe, ausgebildet ist. Die Lenk-Speisepumpe sorgt für einen Volumenstrom im Lenkhydraulikkreislauf, über den insbesondere eine Lenkeinrichtung wie beispielsweise ein Lenkorbitrol versorgt wird. Darüber hinaus ist die Lenk-Speisepumpe bevorzugt zur Einspeisung von Hydraulikfluid in den Fahrantriebshydraulikkreislauf, der insbesondere als geschlossener Kreislauf ausgebildet ist, ausgebildet. Hierdurch wird ein Hydraulikfluidverlust im Fahrantriebshydraulikkreislauf ausgeglichen und eine Querspülung realisiert. Allerdings wird jedoch keinerlei Antriebsenergie von der Lenk-Speisepumpe in den Fahrantriebshydraulikkreislauf eingebracht. Die Antriebsenergie des Fahrantriebshydraulikkreislaufs stammt ausschließlich aus der Fahrpumpe oder, im Schubbetrieb, aus den Verdichtungsbandagen beziehungsweise Rädern der Verdichtungsmaschine. Insofern sind der Lenkhydraulikkreislauf und der Fahrantriebshydraulikkreislauf separat voneinander ausgebildet und voneinander getrennt.

Bevorzugt ist die Fahrpumpe über eine mechanische Kopplung mit der Lenk-Speisepumpe gekoppelt. Auf diese Weise kann ein Drehmoment zwischen diesen Pumpen übertragen werden. Insbesondere kann ein überschüssiges Drehmoment an der Fahrpumpe im Schubbetrieb von einem Bremsmoment an der Lenk-Speisepumpe gegengehalten werden. Um dieses Bremsmoment zu erzeugen, ist bevorzugt in einer Hydraulikleitung zwischen der Lenk-Speisepumpe und einer Lenkeinrichtung des Lenkhydraulikkreislaufs eine hydraulische Drossel angeordnet. Die hydraulische Drossel ist insbesondere von der Steuereinrichtung steuerbar ausgebildet, insbesondere derart, dass durch die Steuereinrichtung eingestellt werden kann, wie groß das von der Drossel gebildete Strömungshindernis sein soll. Mit anderen Worten kann der Druckabfall an der Drossel von der Steuereinrichtung eingestellt werden. Dabei kann die Steuereinrichtung die Drossel beispielsweise derart ansteuern, dass die Drossel kein Strömungshindernis darstellt und auch kein Druckabfall an ihr vorliegt. In diesem Fall wird ebenfalls kein Bremsmoment generiert. Die Steuereinrichtung kann die Drossel allerdings beispielsweise auch derart ansteuern, dass ein Druckabfall an dieser vorliegt, wodurch an der Lenk-Speisepumpe ein Bremsmoment entsteht. Der Betrag dieses Bremsmoments kann von der Steuereinrichtung je nach Bedarf eingestellt werden. In einer bevorzugten Ausführungsform ist die hydraulische Drossel als Proportional-Druckbegrenzungsventil ausgebildet. Dies ermöglicht zum einen eine zuverlässige und bedarfsgerechte Regelung des Bremsmomentes über die Steuereinrichtung und zum anderen kann gleichzeitig durch eine entsprechende Ansteuerung der Drossel eine permanente Versorgung der Lenkeinrichtung im Lenkhydraulikkreislauf mit einem ausreichenden Volumenstrom sichergestellt werden. Je nach vorliegender Betriebssituation kann so ein benötigtes Bremsmoment zur Verfügung gestellt werden, um die Verdichtungsmaschine abzubremsen.

Es kann vorgesehen sein, dass das Hydrauliksystem der Verdichtungsmaschine neben dem Fahrantriebshydraulikkreislauf und dem Lenkhydraulikkreislauf einen von diesen getrennten, weiteren Hydraulikkreislauf zum Betrieb von weiteren Arbeitseinrichtungen aufweist. Beispielsweise kann es sich hierbei um einen Hydraulikkreislauf zum Betrieb eines Schwingungserregers in einer Verdichtungsbandage handeln. So ist es beispielsweise bevorzugt, wenn ein von dem Fahrantriebshydraulikkreislauf und dem Lenkhydraulikkreislauf separater Arbeitshydraulikkreislauf mit einer Arbeitspumpe vorgesehen ist, wobei die Arbeitspumpe mit dem Elektromotor antriebsverbunden sein kann. Auch die Arbeitspumpe wird daher bevorzugt vom Elektromotor angetrieben und sitzt beispielsweise auf einer Abtriebswelle des Elektromotors oder an einem Durchtrieb einer der weiteren Pumpen. Alternativ kann die Arbeitspumpe von einem vom Elektromotor separaten elektrischen Antrieb, beispielsweise einem weiteren Elektromotor, angetrieben werden. Durch die Anordnung eines weiteren, von den anderen Hydraulikkreisläufen separaten Arbeitshydraulikkreislaufs im Hydrauliksystem der Verdichtungsmaschine können komplizierte Hydraulikschaltungen und -bauteile vermieden werden. Hierfür ist es insbesondere wichtig, dass weitere Arbeitseinrichtungen neben der Drossel und dem Lenksystem nicht im Lenkhydraulikkreislauf angeordnet sind beziehungsweise nicht von der Lenk-Speisepumpe betrieben werden. Auf diese Weise kann beispielsweise auf ein Prioritätsventil im Lenkhydraulikkreislauf verzichtet werden. Es ist daher ebenfalls bevorzugt vorgesehen, dass die Lenk-Speisepumpe und die von ihr versorgten Hydraulikleitungen prioritätsventilfrei ausgebildet sind.

Damit die Steuereinrichtung die Steuerung sämtlicher Komponenten des Systems sowie insbesondere auch den Betrag des an der Lenk-Speisepumpe bereitgestellten Bremsmomentes bedarfsgerecht an die aktuelle Betriebssituation der Verdichtungsmaschine anpassen kann, wird die Steuereinrichtung mit verschiedenen relevanten Regelgrößen versorgt. Nachstehende Angaben beziehen sich auf den die Fahrpumpe antreibenden Elektromotor. Hierfür ist es bevorzugt vorgesehen, dass ein Drehzahlsensor am Elektromotor und/oder an einem Fahrmotor des Fahrantriebshydraulikkreislaufs vorgesehen ist, wobei der Drehzahlsensor mit der Steuereinrichtung verbunden ist und seine Messwerte an diese übermittelt. Der Drehzahlsensor ist insbesondere dazu ausgebildet, eine Ist-Drehzahl des Elektromotors und/oder eine Ist-Fahrgeschwindigkeit der Verdichtungsmaschine oder einen hiermit korrelierenden Parameter zu bestimmen. Ergänzend oder alternativ kann beispielsweise ein Temperatursensor, beispielsweise am Elektromotor, am Umrichter beziehungsweise Inverter oder an der Batterie vorgesehen sein. Es können auch mehrere Temperatursensoren an mehreren dieser Komponenten gleichzeitig vorgesehen sein. Darüber hinaus kann ergänzend oder alternativ ein Ladungszustandssensor an der Batterie und/oder ein Amperemeter zur Bestimmung der Stromstärke durch den Elektromotor und/oder den Umrichter beziehungsweise Inverter und/oder ein Drehmomentsensor am Elektromotor vorgesehen sein. Sämtlicher dieser Sensoren sind mit der Steuereinrichtung verbunden und übermitteln ihre Messwerte an diese. Diese werden im erfindungsgemäßen Verfahren als Eingangsgrößen, insbesondere als Ist-Werte des Betriebsparameters, genutzt. Darüber hinaus ist die Steuereinrichtung bevorzugt dazu ausgebildet, einen Soll-Wert des Betriebsparameters, beispielsweise eine Soll-Drehzahl des Elektromotors und/oder eine Soll-Fahrgeschwindigkeit der Verdichtungsmaschine und/oder eine Soll-Temperatur des Elektromotors und/oder des Umrichters beziehungsweise Inverters und/oder der Batterie und/oder einen Soll-Ladungszustand der Batterie und/oder eine Soll-Stromstärke durch den Elektromotor und/oder den Umrichter beziehungsweise den Inverter und/oder ein Soll-Drehmoment am Elektromotor oder einen hiermit korrelierenden Parameter, zu bestimmen. Hierfür kann beispielsweise eine Einstellung eines Bedienelementes der Verdichtungsmaschine herangezogen werden, beispielsweise die Position eines Fahrhebels, der von einem Bediener verstellbar ist und der eine gewünschte Fahrgeschwindigkeit vorgibt. Andere Soll-Werte ergeben sich aus Sicherheitsüberlegungen. Der Soll-Wert, beispielsweise die Soll-Drehzahl beziehungsweise die Soll-Fahrgeschwindigkeit, werden im erfindungsgemäßen Verfahren als Sollgrößen genutzt, mit denen die Werte der Eingangsgrößen zu vergleichen sind. Durch den entsprechenden Vergleich ermittelt die Steuereinrichtung, ob sich die Verdichtungsmaschine aktuell im Schubbetrieb befindet, sprich, die Verdichtungsmaschine aktuell gebremst wird beziehungsweise werden soll und/oder ein Gefälle hinabfährt.

Insbesondere ist die Steuereinrichtung dazu ausgebildet, ein Bremsmoment an der Lenk-Speisepumpe durch die hydraulische Drossel zu erzeugen, wenn der Ist-Wert des Betriebsparameters, erfindungsgemäß die Ist-Fahrgeschwindigkeit oder der hiermit korrelierenden Parameter, größer ist als der Soll-Wert, erfindungsgemäß die Soll-Fahrgeschwindigkeit oder der hiermit korrelierenden Parameter. Die Steuereinrichtung ist also dazu ausgebildet, ein Bremsmoment an der Lenk-Speisepumpe durch die hydraulische Drossel zu erzeugen, wenn sich die Verdichtungsmaschine im Schubbetrieb befindet und die Steuereinrichtung dies anhand des Vergleichs der Ist-Werte mit den Sollwerten feststellt. Die Lenk-Speisepumpe hält dann auf diese Weise das durch den Schubbetrieb entstehende Drehmoment an der Fahrpumpe über die mechanische Kopplung der beiden Pumpen gegen und ersetzt damit erfindungsgemäß den konventionellen Verbrennungsmotor. Es ist auf diese Weise auch bei einer elektrisch betriebenen Verdichtungsmaschine möglich, ein entsprechendes Stütz- beziehungsweise Bremsmoment zur Verfügung zu stellen. Es können daher die konventionell üblicherweise verwendeten hydrostatischen Fahrantriebe mit statischen Feststellbremsen beibehalten werden, ohne auf teurere Alternativen ausweichen zu müssen.

Ein besonders platzsparender und einfacher Aufbau lässt sich erreichen, wenn ein Rücklauf des Lenkhydraulikkreislaufs und ein Rücklauf des Fahrantriebshydraulikkreislaufs und gegebenenfalls ebenfalls ein Rücklauf des Arbeitshydraulikkreislaufs gemeinsam in einen Tank beziehungsweise den Hydrauliktank mündend ausgebildet sind. Die entsprechenden Rückläufe werden daher zusammengeführt, sodass nur eine einzige Rückleitung bis zum Hydrauliktank führen muss, wodurch Bauraum eingespart wird und das System insgesamt einen einfacheren Aufbau erhält.

Es kann weiter ergänzend oder alternativ vorgesehen sein, dass ein Hydraulikspeicher vorhanden ist, der über ein Speicherladeventil an den Bremshydraulikkreislauf, insbesondere Lenkhydraulikkreislauf, angeschlossen ist. Dies ermöglicht die Nutzung des Bremshydraulikkreislaufes zum Laden des Hydraulikspeichers, insbesondere in Phasen, in denen ein Bremsmoment erzeugt werden soll.

Die Verdichtungsmaschine kann erfindungsgemäß ergänzend oder alternativ eine mittels eines Hydraulikmotors, insbesondere über eine Welle direkt, angetriebene Fahreinrichtung und eine mechanisch an diesen Hydraulikmotor, insbesondere über eine Übersetzungsstufe, gekoppelte Bremshydraulikpumpe des Bremshydraulikkreislaufes umfassen. Ergänzend oder alternativ kann die Verdichtungsmaschine eine mittels eines Elektromotors, insbesondere über eine Welle direkt, angetriebene Fahreinrichtung und ein Kopplungsgetriebe, über dass der Elektromotor an eine Bremshydraulikpumpe eines Bremshydraulikkreislaufes mechanisch koppelbar ist, wobei der Bremshydraulikkreislauf die hydraulische Drossel, insbesondere stromabwärts der Bremshydraulikpumpe, umfasst. Es kann jeder Bandage der Verdichtungsmaschine eine solche vorstehend beschriebene Anordnung zugewiesen sein.

In einer weiteren bevorzugten Weiterbildung der Erfindung kann die Verdichtungsmaschine derart ausgebildet sein, dass jede der Fahreinrichtungen, insbesondere jede der Verdichtungsbandagen, einen eigenen, zueinander separaten Bremshydraulikkreislauf umfasst und weiter wenigstens eines der folgenden Merkmale aufweist: Jedem Bremshydraulikkreislauf ist ein separater Hydraulikspeicher zugeordnet; es ist ein gemeinsamer Hydraulikspeicher vorhanden, der über jeweils eine Zufuhrleitung über jeweils ein oder ein gemeinsames Speicherladeventil mit wenigstens zwei Bremshydraulikkreisläufen verbunden ist; die Drosseln der beiden Bremshydraulikkreisläufe sind unabhängig voneinander ansteuerbar und die Steuereinrichtung ist derart ausgebildet, dass sie die beiden Drosseln unabhängig voneinander und/oder unter Berücksichtigung der aktuellen Fahrrichtung, steuert. Insbesondere diese Ausführungsform ermöglicht eine zueinander losgelöste Steuerung des jeweils auf eine vordere und eine hintere Fahreinrichtung wirkenden Bremsmomentes, das durch die vorstehenden Einrichtungen erzeugt wird. Dies kann insbesondere dann von Vorteil sein, wenn maschinenspezifische, an den jeweiligen Fahreinrichtungen anlastende Trägheitsmomente abhängig von der aktuellen Fahrrichtung der Verdichtungsmaschine variieren.

Die Erfindung wird nachstehend anhand der in den Figuren gezeigten Ausführungsbeispiele näher erläutert. Es zeigen schematisch:
Figur 1: eine Seitenansicht einer Verdichtungsmaschine, hier einer Tandemwalze;
Figur 2: eine Seitenansicht einer Verdichtungsmaschine, hier eines Walzenzuges;
Figur 3: eine Seitenansicht einer Verdichtungsmaschine, hier eines Müllverdichters;
Figur 4: ein Diagramm eines vorliegend relevanten Anteils des Hydrauliksystems einer Verdichtungsmaschine;
Figur 5: ein Diagramm der Steuereinrichtung und ihrer jeweiligen Verbindungen zu weiteren Komponenten;
Figur 6: ein zeitlichen Ablauf verschiedener Parameter in einem beispielhaften Anwendungsfall;
Figur 7: ein Ablaufdiagramm des Verfahrens;
Figur 8: eine alternative Ausführungsform eines Hydrauliksystems einer Verdichtungsmaschine;
Figur 9: ein Schema eines alternativen Antriebskonzeptes;
Figur 10: ein Schema eines weiteren alternativen Antriebskonzeptes; und
Figur 11: ein zeitlichen Ablauf verschiedener Parameter in einem weiteren beispielhaften Anwendungsfall.

Gleiche beziehungsweise gleich wirkende Bauteile werden in den Figuren mit den gleichen Bezugszeichen beziffert. Sich wiederholende Bauteile sind nicht notwendigerweise in jeder Figur gesondert bezeichnet.

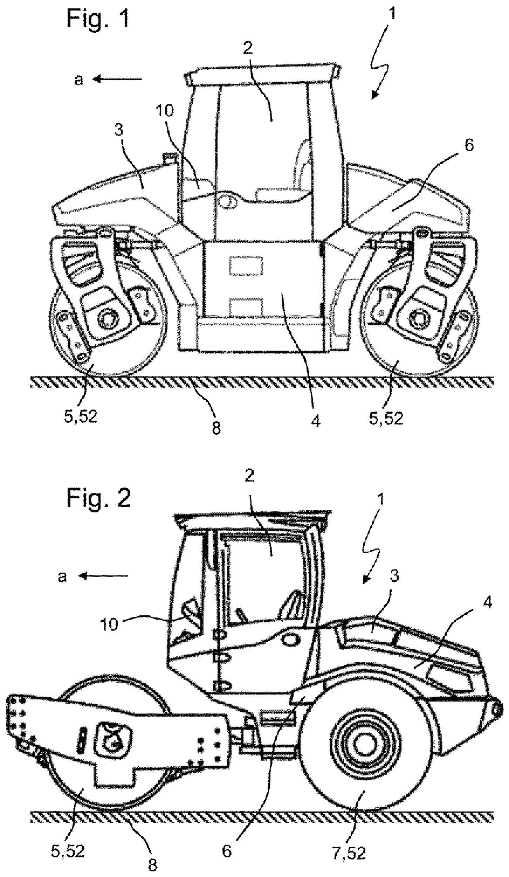

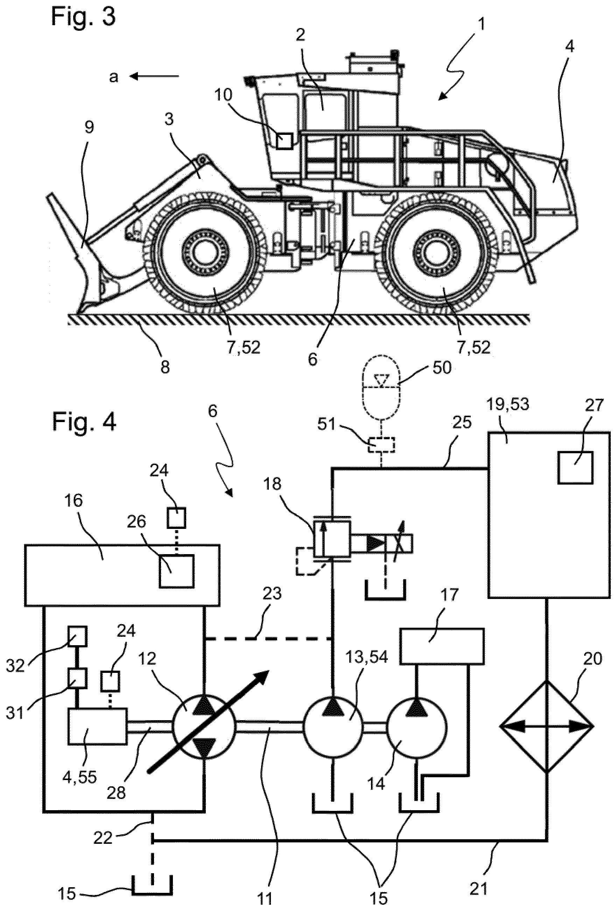

Die Figuren 1, 2 und 3 zeigen beispielhaft verschiedene erfindungsgemäße Verdichtungsmaschinen 1. So ist in Figur 1 beispielsweise eine Tandemwalze dargestellt, konkret eine schemelgelenkte Tandemwalze, die typischerweise zur Asphaltverdichtung eingesetzt wird. Alternativ können auch knickgelenkte Tandemwalzen oder Gummiradwalzen verwendet werden, deren jeweilige Maschinenrahmenstruktur im Stand der Technik bekannt ist. Figur 2 zeigt einen Walzenzug mit einem Vorder- und einem Hinterwagen, der typischerweise zur Verdichtung von Erdböden genutzt wird. Figur 3 wiederum veranschaulicht einen Müllverdichter, wie er auf Mülldeponien zum Einsatz kommt. Die Verdichtungsmaschinen 1 umfassen typischerweise einen Maschinenrahmen 3 mit einem Fahrerstand 2 sowie ein Fahrwerk, mit dem sie sich in oder entgegen einer Arbeitsrichtung a über den zu verdichtenden Boden 8 bewegen. Hierfür weist die Tandemwalze gemäß Figur 1 beispielsweise als Fahreinrichtung 52 eine vordere und eine hintere Verdichtungsbandage 5 auf. Der Walzenzug gemäß Figur 2 weist als Fahreinrichtung 52 vorne eine Verdichtungsbandage 5 und hinten Räder 7 auf. Die Verdichtungsbandagen 5 können optional einen Schwingungs- oder Vibrationserreger umfassen, der die Verdichtung durch die Verdichtungsbandage 5 beeinflusst. Der Müllverdichter gemäß Figur 3 weist nur bandagenähnliche Räder 7 auf und umfasst zusätzlich einen Räumschild 9, mit dem Deponiematerial verteilt werden kann. Sämtliche der gezeigten Ausführungsformen der Verdichtungsmaschine 1 werden von einem Elektromotor 4 als Primärantriebsaggregat beziehungsweise als Fahrantrieb angetrieben und weisen zusätzlich ein Hydrauliksystem 6 auf. Ferner umfassen sämtliche der gezeigten Maschinen einen Speicher für elektrische Energie oder eine Brennstoffzelle, dieser wird nachstehend beispielhaft als Batterie 32 bezeichnet. Zur Durchführung des Verfahrens und auch zur Ansteuerung sämtlicher beteiligter Komponenten der Verdichtungsmaschine 1 umfassen diese insbesondere ebenfalls eine Steuereinrichtung 10, die beispielsweise Teil des Bordcomputers ist oder selbst den Bordcomputer bildet. Darüber hinaus umfasst die Steuereinrichtung 10 bevorzugt ebenfalls Bedienelemente, beispielsweise Fahrhebel oder Ähnliches, über die ein Bediener die Verdichtungsmaschine 1 steuert.

In Figur 4 ist ein Teil des Hydrauliksystems 6 der Verdichtungsmaschine 1 beispielhaft wiedergegeben. Sämtliche Hydraulikpumpen des Hydrauliksystems 6 werden im vorliegenden Ausführungsbeispiel bevorzugt vom Elektromotor 4, insbesondere über eine Abtriebswelle 28, angetrieben. Der Elektromotor 4 wird aus einem Speicher für elektrische Energie, beispielsweise einer Batterie 32, angetrieben. Zwischen dem Elektromotor 4 und der Batterie 32 kann ein Umrichter 31 beziehungsweise Inverter angeordnet sein. Beispielsweise treibt der Elektromotor 4 auf diese Weise eine Fahrpumpe 12 an, die Teil eines, bevorzugt geschlossen ausgebildeten, Fahrantriebshydraulikkreislaufs 16 ist. Der Fahrantriebshydraulikkreislaufs 16 umfasst bevorzugt wenigstens einen Fahrmotor 26, der den Volumenstrom der Fahrpumpe 12 in ein Antriebsdrehmoment für eine Fahreinrichtung 55, insbesondere eine Verdichtungsbandage 5 oder ein Rad 7, zur Fortbewegung der Verdichtungsmaschine 1 umwandelt und an dieser weiterleitet, beispielsweise über eine Welle. In diesem Fall ist der Elektromotor 4 somit eine die Fahreinrichtung 55 indirekt antreibende Einrichtung. Eine Bremshydraulikpumpe 54, konkret eine Lenk-Speisepumpe 13, wird bevorzugt ebenfalls von der Abtriebswelle 28 des Elektromotors 4 angetrieben. Die Lenk-Speisepumpe 13 ist bevorzugt Teil eines Bremshydraulikkreislaufes 53, vorliegend einem Lenkhydraulikkreislauf 19, der insbesondere eine Lenkeinrichtung 27 umfasst, bei der es sich beispielsweise um ein Lenkorbitrol handelt. Bei der Lenk-Speisepumpe 13 kann es sich um eine Konstantpumpe handeln. Es kann aber auch eine Verstellpumpe verwendet werden, um das erzeugte Bremsmoment auch über eine Veränderung des Fördervolumens der Lenk-Speisepumpe variieren zu können. In der Hydraulikleitung 25 zwischen der Lenk-Speisepumpe 13 und der Lenkeinrichtung 27 ist bevorzugt eine Drossel 18 angeordnet. Diese kann bevorzugt, wie im gezeigten Ausführungsbeispiel angedeutet, als Proportional-Druckbegrenzungsventil ausgeführt sein. Darüber hinaus kann im Lenkhydraulikkreislauf 19 ebenfalls ein Kühler 20 angeordnet sein, der beispielsweise mit einem Lüfter zusammenwirkt, und über den Wärme aus dem Hydraulikmedium in die Umgebungsluft abgeführt wird. Wichtig ist, dass eine mechanische Kopplung 11 zwischen der Fahrpumpe 12 und der Lenk-Speisepumpe 13 besteht. Im gezeigten Ausführungsbeispiel kann diese mechanische Kopplung 11 beispielsweise durch einen Durchtrieb oder durch eine gemeinsame Anordnung der beiden Pumpen auf der Abtriebswelle 28 des Elektromotors 4 realisiert werden. Wichtig ist lediglich, dass ein Drehmoment von der Fahrpumpe 12 auf die Lenk-Speisepumpe 13 übertragen werden kann und umgekehrt. Schließlich weist das Hydrauliksystem 6 bevorzugt einen weiteren Hydraulikkreislauf auf, konkret einen Arbeitshydraulikkreislaufs 17 mit einer Arbeitspumpe 14, die ebenfalls vom Elektromotor 4 und insbesondere ebenfalls über dessen Abtriebswelle 28 angetrieben wird. Die Pumpen 12 und 14 können in einer Tandemanordnung angeordnet sein. Der Arbeitshydraulikkreislaufs 17 ist beispielsweise zum Betrieb eines Schwingungserregers in einer Verdichtungsbandage 5 vorgesehen.

Erfindungsgemäß ist es grundsätzlich bevorzugt, wenn das von der Lenk-Speisepumpe 13 geförderte Hydraulikfluid zumindest mit dem der Lenkeinrichtung 27 von der Lenk-Speisepumpe 13 zugeführten Anteil an gefördertem Hydraulikfluid vollständig die Drossel 18 passiert, bevor es der Lenkeinrichtung 27 zugeführt wird. Die Drossel ist somit idealerweise stromaufwärts zur Lenkeinrichtung 27 angeordnet. Die Lenkeinrichtung 27 wird somit mit demselben Hydraulikfluid versorgt, das vorher die Drossel 18 passiert hat. Es kann vorgesehen sein, dass stromaufwärts der Drossel 18 ein Anteil des von der Lenk-Speisepumpe 13 geförderten Hydraulikfluids zur Querspülung des oder der Fahrmotoren abgezweigt wird. Die Bestromung und damit die Position der Drossel 18 bzw. deren Drosselwirkung kann abhängig von der Drehzahl des Elektromotors und/oder der Maschinengeschwindigkeit gesteuert bzw. geregelt werden.

Wie in Figur 4 gezeigt, ist es bevorzugt, dass der Fahrantriebshydraulikkreislaufs 16, der Lenkhydraulikkreislauf 19 und der Arbeitshydraulikkreislaufs 17 jeweils eine eigene, exklusiv für diesen Kreislauf zuständige Pumpe aufweisen. In dem jeweiligen Kreislauf wird daher bevorzugt ausschließlich hydraulische Energie über die dem jeweiligen Kreislauf zugeordnete Pumpe erzeugt. Nichtsdestotrotz ist allerdings bevorzugt die Lenk-Speisepumpe 13 gleichzeitig als Speisepumpe für den Fahrantriebshydraulikkreislauf 16 ausgebildet. Dies bedeutet, dass aus dem Lenkhydraulikkreislauf 19 bevorzugt eine Speiseleitung 23 abgezweigt wird, die den Fahrantriebshydraulikkreislauf 16 mit Hydraulikfluid versorgt. Die hierfür entsprechend notwendigen Ventile etc. sind dem Fachmann bekannt und werden daher nicht dargestellt. Durch die Speiseleitung 23 wird bevorzugt allerdings lediglich eine Querspülung des Fahrantriebshydraulikkreislaufs 16 realisiert und auftretende Leckageverluste im geschlossenen Fahrantriebshydraulikkreislauf ausgeglichen. Antriebsenergie wird über diese Leitung nicht zwischen dem Lenkhydraulikkreislauf 19 und dem Fahrantriebshydraulikkreislaufs 16 übertragen. Für die Leckageverluste und die Querspülung weist der Fahrantriebshydraulikkreislaufs 16 bevorzugt einen Fahrrücklauf 22 auf, der in den Tank 15, beispielsweise einen Hydrauliktank, einmündet. Der Lenkhydraulikkreislauf 19 weist ebenfalls bevorzugt eine Rücklaufleitung, konkret den Lenkrücklauf 21 auf. Bevorzugt werden der Fahrrücklauf 22 und der Lenkrücklauf 21 zusammengeführt und münden dann als gemeinsame Rücklaufleitung in den Tank 15.

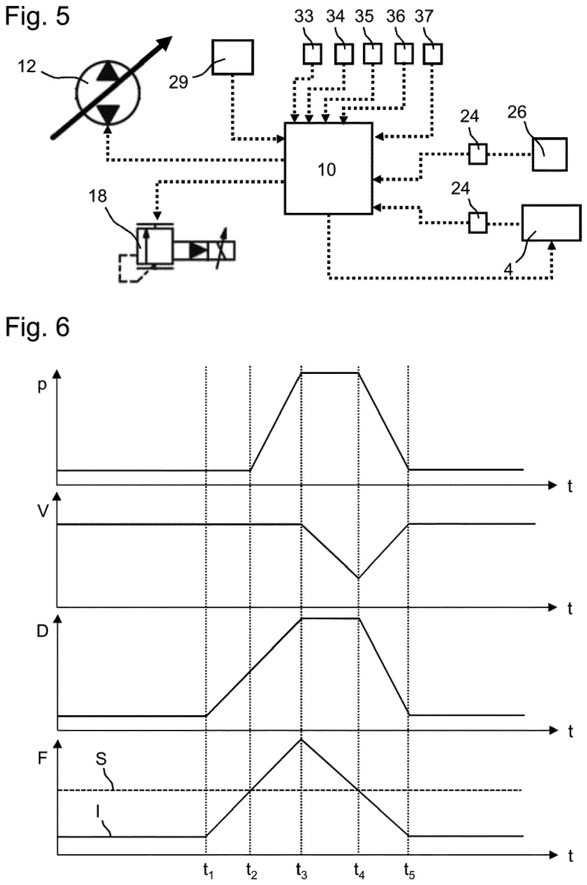

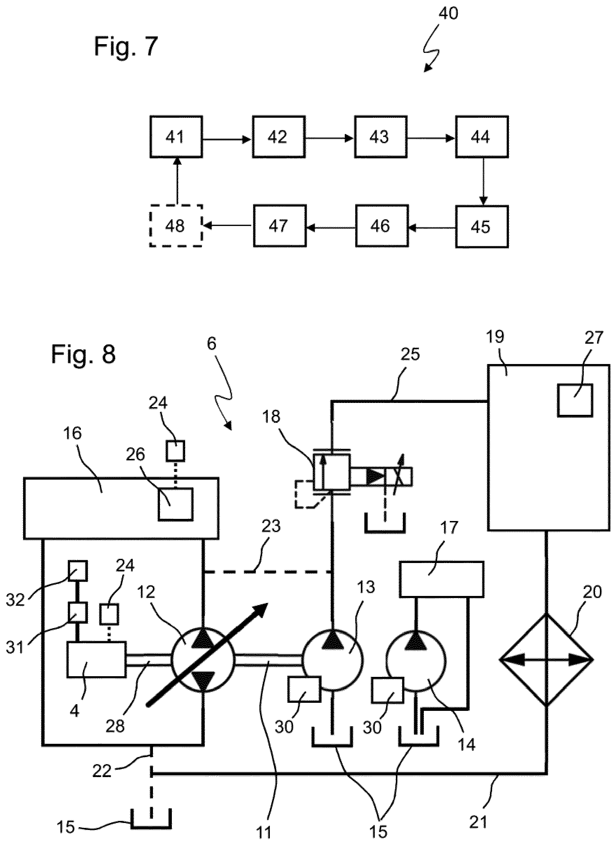

Wie ebenfalls in Figur 4 gezeigt ist, ist bevorzugt mindestens ein Drehzahlsensor 24 vorhanden, der mit dem Elektromotor 4 und/oder mit einem Fahrmotor 26 verbunden ist. Es können auch mehrere Drehzahlsensoren 24 vorgesehen sein, um die jeweiligen Daten an den genannten Komponenten zu erheben. Der Drehzahlsensor 24 ist insbesondere dazu ausgebildet, die Ist-Drehzahl des Elektromotors 4 und/oder die Ist-Fahrgeschwindigkeit der Verdichtungsmaschine 1 zu messen und dies an die Steuereinrichtung 10 weiterzuleiten. Dies wird ebenfalls in Figur 5 dargestellt. Die gepunkteten Pfeile in Figur 5 zeigen die Richtung des Informationsflusses an, also beispielsweise vom Fahrmotor 26 über den Drehzahlsensor 24 zur Steuereinrichtung 10 sowie ebenfalls vom Elektromotor 4 über einen Drehzahlsensor 24 zur Steuereinrichtung 10. In Figur 5 sind darüber hinaus weitere Sensoren gezeigt, die zum Einsatz kommen können. Diese sind aus Übersichtlichkeitsgründen in den Figuren 4 und 8 nicht nochmals gesondert dargestellt. Konkret handelt es sich beispielsweise um einen Temperatursensor 33 am Elektromotor 4 und/oder am Umrichter 31 beziehungsweise Inverter und/oder an der Batterie 32. Ergänzend oder alternativ kann ebenfalls ein Ladungszustandssensor 34 an der Batterie 32 vorgesehen sein. Weiter kann ein Amperemeter 35 vorgesehen sein, um die Stromstärke durch den Elektromotor 4 und/oder durch den Umrichter 31 beziehungsweise Inverter zu bestimmen. Wieder ergänzend oder alternativ kann ein Drehmomentsensor 36 am Elektromotor 4 vorgesehen sein. Schließlich kann ebenfalls ein weiterer Temperatursensor 37 vorgesehen sein, der die Temperatur im Lenkhydraulikkreislauf 19 bestimmt. Die Messwerte sämtlicher der genannten Sensoren werden an die Steuereinrichtung 10 übermittelt und von dieser, bis auf die Temperatur im Lenkhydraulikkreislauf 19, als Soll-Wert des Betriebsparameters genutzt. Darüber hinaus ermittelt die Steuereinrichtung 10 bevorzugt einen Soll-Wert für den jeweils betrachteten Betriebsparameter, beispielsweise die Soll-Drehzahl des Elektromotors 4 und/oder die Soll-Fahrgeschwindigkeit der Verdichtungsmaschine 1. Hierfür ist die Steuereinrichtung 10 beispielsweise mit einem Bedienelement 29 verbunden, über das ein Bediener Steuerbefehle zur Steuerung der Verdichtungsmaschine 1 an die Steuereinrichtung 10 eingeben kann. Beim Bedienelement 29 kann es sich also beispielsweise um einen Fahrhebel oder auch beispielsweise um einen Bremshebel handeln. Aus den jeweiligen Vorgaben des Bedieners leitet die Steuereinrichtung 10 bevorzugt die Soll-Drehzahl des Elektromotors 4 und/oder die Soll-Fahrgeschwindigkeit der Verdichtungsmaschine 1 ab. Alternativ können diese Werte auch aus einer Betriebssituation beziehungsweise einem Betriebszustand der Verdichtungsmaschine 1 oder aus Sicherheitsüberlegungen abgeleitet werden.

Die Temperatur im Lenkhydraulikkreislauf 19 kann dazu genutzt werden, um sicherzustellen, dass der Lenkhydraulikkreislauf 19 nicht durch das Bereitstellen des Bremsmomentes an der Lenk-Speisepumpe 13 überhitzt. Beispielsweise kann vorgesehen sein, dass nur dann ein Bremsmoment an der Lenk-Speisepumpe 13 bereitgestellt wird, wenn die Temperatur im Lenkhydraulikkreislauf 19 unter einem vorgegebenen Schwellenwert liegt. Der Schwellenwert wird dann entsprechend derart gewählt, dass ein sicherer Betrieb des Lenkhydraulikreislaufes 19 und insbesondere der Lenkeinrichtung 27 gewährleistet ist.

Die Steuereinrichtung 10 erhält also bevorzugt sowohl Fahrvorgaben des Bedieners als auch Ist-Werte verschiedener Parameter der Verdichtungsmaschine 1. Beispielsweise kann die Steuereinrichtung 10 bestimmen, ob die ermittelten Ist-Werte, beispielsweise der Drehzahl und/oder der Fahrgeschwindigkeit, die Soll-Werte übersteigen, beispielsweise auch um einen bestimmten Schwellenwert und/oder über die Dauer einer Toleranzzeit hinaus. Anhand dieser Informationen steuert die Steuereinrichtung 10 bevorzugt dann die Komponenten der Verdichtungsmaschine 1. Insbesondere steuert die Steuereinrichtung 10 die Drehzahl des Elektromotors 4, das Fördervolumen der Fahrpumpe 12 und den Strömungswiderstand der Drossel 18.

Optional kann ferner ein Hydraulikspeicher 50 an die Hydraulikleitung 25 des Lenkhydraulikkreislaufes 19, insbesondere an die Hydraulikleitung 25 zwischen der Lenk-Speisepumpe 13 und der Lenkeinrichtung 27, über ein Speicher-Lade-Entladeventil 51 angeschlossen sein, so dass hydraulische Energie, zumindest übergangsweise, speicherbar und auch in den Lenkhydraulikkreislauf (oder auch andere Hydraulikkreisläufe, insbesondere zum Antrieb von Arbeitsfunktionen, wie beispielsweise dem Heben und Senken eines Kantenschneidgerätes etc.) einspeisbar ist.

Figur 6 zeigt den schematischen zeitlichen Ablauf eines konkreten Anwendungsfalls. Insbesondere wird hierbei auf die Fahrgeschwindigkeit F der Verdichtungsmaschine 1 eingegangen. Ein derartiger Ablauf wäre für andere Betriebsparameter allerdings analog oder zumindest sehr ähnlich, so dass nachstehend beispielhaft nur auf diesen Fall eingegangen wird. In den gezeigten Diagrammen ist jeweils auf der Abszisse die Zeit t aufgetragen, während auf den Ordinaten unterschiedliche, nachstehend noch erläuterte Parameter aufgetragen sind. Die Diagramme sind derart angeordnet, dass die Zeitpunkte t₁ bis t₅ in jedem der Diagramme den jeweils gleichen Zeitpunkt beschreiben. So zeigt das unterste Diagramm beispielsweise die Fahrgeschwindigkeit F der Verdichtungsmaschine 1 im zeitlichen Verlauf. Gezeigt ist sowohl der Verlauf des Ist-Werts I der Fahrgeschwindigkeit F als auch deren Sollwert S. Beispielsweise fährt die Verdichtungsmaschine 1 im Arbeitsbetrieb bis zum Zeitpunkt t₁ mit konstanter Fahrgeschwindigkeit F auf ebenem Boden 8. Ab dem Zeitpunkt t₁ fährt die Verdichtungsmaschine 1 ein Gefälle hinab, wodurch die Verdichtungsmaschine 1 beschleunigt und sich die Fahrgeschwindigkeit F erhöht. Zum Zeitpunkt t₂ überschreitet die Fahrgeschwindigkeit F den Sollwert S und beschleunigt weiter bis zum Zeitpunkt t₃. Zum Zeitpunkt t₃ kommt es zu einer Trendumkehr, und die Fahrgeschwindigkeit F nimmt wieder ab, bis sie zum Zeitpunkt t₄ den Sollwert S wieder unterschreitet und zum Zeitpunkt t₅ wieder bis auf den Ausgangswert abgenommen hat. Das oberste der dargestellten Diagramme zeigt den betragsmäßigen Druckabfall p an der Drossel 18. Der Druckabfall p ist proportional zum entstehenden Bremsmoment, so dass auch dieses durch dieses Diagramm dargestellt ist. Da im normalen Arbeitsbetrieb der Verdichtungsmaschine 1 kein Bremsmoment an der Lenk-Speisepumpe 13 benötigt wird, bleibt der Druckabfall p bis zum Zeitpunkt t₂ konstant, beispielsweise bei null. Zum Zeitpunkt t₂, an dem der Ist-Wert I der Fahrgeschwindigkeit F den Sollwert S übersteigt, steuert die Steuereinrichtung 10 die Drossel 18 an und erhöht deren Strömungswiderstand, sodass ein Druckabfall p an der Drossel 18 entsteht. Mit dem Druckabfall p entsteht ebenfalls ein proportionales Bremsmoment an der Lenk-Speisepumpe 13, welches dazu genutzt werden kann, ein durch den Schubbetrieb entstehendes Drehmoment an der Fahrpumpe 12 abzustützen und so zum Abbremsen der Verdichtungsmaschine 1 beizutragen. Die Steuereinrichtung 10 stellt dabei das Bremsmoment insbesondere proportional dazu ein, wie stark der Ist-Wert der Fahrgeschwindigkeit F den Sollwert S übersteigt. Da die Fahrgeschwindigkeit F zwischen den Zeitpunkten t₂ und t₃ weiter zunimmt, beispielsweise, weil das Bremsmoment nicht ausreicht, um die Beschleunigung aufgrund des Gefälles auszugleichen, steigt in dieser Zeitspanne ebenfalls der Druckabfall p und das damit hervorgerufene Bremsmoment. Ab dem Zeitpunkt t₃ nimmt die Fahrgeschwindigkeit F wieder ab. Der Druckabfall p an der Drossel 18 wird allerdings zumindest im gezeigten Fall von der Steuereinrichtung 10 noch so lange auf dem erreichten Niveau gehalten, bis die Fahrgeschwindigkeit F wieder zum Zeitpunkt t₄ unter den Sollwert absinkt. Erst ab diesem Zeitpunkt reduziert die Steuereinrichtung 10 dann den Druckabfall p wieder, beispielsweise auf null.

Die beiden mittleren Diagramme der Figur 6 zeigen das Fördervolumen V sowie die Drehzahl D der Fahrpumpe 12. Die Drehzahl D der Fahrpumpe 12 folgt bis zum Zeitpunkt t₃ im Wesentlichen der Fahrgeschwindigkeit F. Bis hierhin bleibt auch das Fördervolumen V der Fahrpumpe 12 konstant. Bliebe das Fördervolumen V der Fahrpumpe 12 allerdings auch über diesen Zeitpunkt t₃ hinaus konstant, so würde die Drehzahl D der Fahrpumpe 12 analog zur Fahrgeschwindigkeit F wieder abnehmen. Um allerdings ein effizientes Bremsen durch das Bremsmoment an der Lenk-Speisepumpe 13 zu ermöglichen, ist es vorteilhaft, wenn ein ausreichend hohes Drehmoment von der Fahrpumpe 12 auf die Lenk-Speisepumpe 13 übertragen wird. Um dies auch in diesem zeitlichen Abschnitt des Verfahrens zu ermöglichen, ist es bevorzugt vorgesehen, dass die Steuereinrichtung 10 die Fahrpumpe 12 derart ansteuert, dass deren Fördervolumen V reduziert wird. Durch das reduzierte Fördervolumen V wird die Drehzahl D der als Motor wirkenden Fahrpumpe 12 erhöht, oder in diesem Fall zumindest konstant gehalten, um den vom als Pumpe arbeitenden Fahrmotor 26 kommenden Volumenstrom aufnehmen zu können. Auf diese Weise fällt die Drehzahl D der Fahrpumpe 12 nicht analog zur Fahrgeschwindigkeit F ab und es wird über die mechanische Kopplung 11 eine höhere Drehzahl auf die Lenk-Speisepumpe 13 übertragen, was wiederum über den hierdurch hervorgerufenen Volumenstrom im Lenkhydraulikkreislauf 19 und insbesondere zur Drossel 18 ein höheres Bremsmoment bewirkt. Insgesamt lässt sich auf diese Weise daher die Bremsleistung verbessern.

Figur 7 zeigt ein Ablaufdiagramm des Verfahrens 40. Das Verfahren 40 beginnt mit einem Antreiben 41 der Fahrpumpe 12 im Fahrantriebshydraulikkreislauf 16 der Verdichtungsmaschine 1 durch den Elektromotor 4. Es umfasst ferner das Antreiben 42 der Lenk-Speisepumpe 13 im Lenkhydraulikkreislauf 19 der Verdichtungsmaschine 1 durch den Elektromotor 4. Die Lenk-Speisepumpe 13 speist ebenfalls Hydraulikfluid in den Fahrantriebshydraulikkreislauf 16 ein. Sie ist über eine mechanische Kopplung 11 mit der Fahrpumpe 12 gekoppelt, so dass Drehmomente zwischen den beiden Punkten übertragbar sind. Es erfolgt dann ein Bestimmen 43 eines Ist-Wertes eines Betriebsparameters, beispielsweise einer Ist-Drehzahl des Elektromotors 4 und/oder einer Ist-Fahrgeschwindigkeit der Verdichtungsmaschine 1 oder eines hiermit korrelierenden Parameters, und ein Bestimmen 44 eines Soll-Wertes des Betriebsparameters, beispielsweise einer Soll-Drehzahl des Elektromotors 4 und/oder einer Soll-Fahrgeschwindigkeit der Verdichtungsmaschine 1 oder eines hiermit korrelierenden Parameters. Diese Werte werden insbesondere an die Steuereinrichtung 10 weitergeleitet oder von dieser erhoben. Die Steuereinrichtung 10 führt dann insbesondere ein Vergleichen 45 des Ist-Werts des Betriebsparameters, beispielsweise der Ist-Drehzahl und/oder der Ist-Fahrgeschwindigkeit oder dem hiermit korrelierenden Parameter, mit dem Soll-Wert des Betriebsparameters, beispielsweise der Soll-Drehzahl und oder der Soll-Fahrgeschwindigkeit oder dem hiermit korrelierenden Parameter, durch. Speziell ermittelt die Steuereinrichtung 10 Fälle, bei denen der Ist-Wert, also beispielsweise die Ist-Drehzahl und/oder die Ist-Fahrgeschwindigkeit oder der hiermit korrelierende Parameter, größer ist als der Soll-Wert, also beispielsweise die Soll-Drehzahl und/oder die Soll-Fahrgeschwindigkeit oder der hiermit korrelierende Parameter. Wird ein derartiger Fall detektiert, so erfolgt ein Erzeugen 46 eines Bremsmomentes an der Lenk-Speisepumpe 13 durch eine hydraulische Drossel 18. Hierfür ist die hydraulische Drossel 18 bevorzugt in der Hydraulikleitung 25 zwischen der Lenk-Speisepumpe 13 und der Lenkeinrichtung 27 im Lenkhydraulikkreislauf 19 angeordnet. Insbesondere wird die hydraulische Drossel 18 von der Steuereinrichtung 10 angesteuert, sodass sich deren Strömungswiderstand erhöht. Das notwendige Drehmoment, um diesen Strömungswiderstand zu überwinden, steht an der Lenk-Speisepumpe 13 als Bremsmoment zur Verfügung und kann über die mechanische Kopplung 11 auf die Fahrpumpe 12 übertragen werden. Es erfolgt daher ein derartiges Übertragen 47 des Bremsmoments von der Lenk-Speisepumpe 13 über die mechanische Kopplung 11 auf die Fahrpumpe 12 des Fahrantriebshydraulikkreislaufs 16. Optional und daher in der Figur gestrichelt dargestellt, kann darüber hinaus ein Reduzieren 48 eines Fördervolumens V der Fahrpumpe 12 durchgeführt werden, um sicherzustellen, dass auch während des Bremsvorganges trotz der damit einhergehenden Verringerung des Volumenstroms im Fahrantriebshydraulikkreislauf 16 eine ausreichende Drehzahl zur Bereitstellung des Bremsmomentes auf die Lenk-Speisepumpe 13 übertragen wird.

Figur 8 zeigt eine alternative Ausführungsform, bei der die Lenk-Speisepumpe 13 und/oder die Arbeitspumpe 14 nicht vom Elektromotor 4 angetrieben werden, sondern jeweils einen eigenen elektrischen Antrieb 30 aufweisen können. Der elektrische Antrieb 30 kann beispielsweise als Elektromotor ausgebildet sein. Wichtig ist, dass auch in dieser Ausführungsform die Fahrpumpe 12 vom Elektromotor 4 angetrieben wird und eine mechanische Kopplung 11 zwischen der Fahrpumpe 12 und der Lenk-Speisepumpe 13 besteht. Die mechanische Kopplung 11 kann hierbei separat vom Abtrieb des Elektromotors 4 ausgebildet sein. Ansonsten stimmt die Ausführungsform der Figur 8 mit derjenigen der Figur 4 überein, so dass zur Vermeidung von Wiederholungen auf die bisherigen Ausführungen Bezug genommen wird.

Es kann ferner, unabhängig vom konkreten Ausführungsbeispiel, eine, insbesondere schaltbare, Kupplung von der mechanischen Kopplung 11 mit umfasst sein. Auf diese Weise kann beispielsweise die mechanische Koppelung zwischen der Fahrpumpe 12 und der Lenkspeisepumpe 13 zumindest übergangsweise unterbrochen werden.

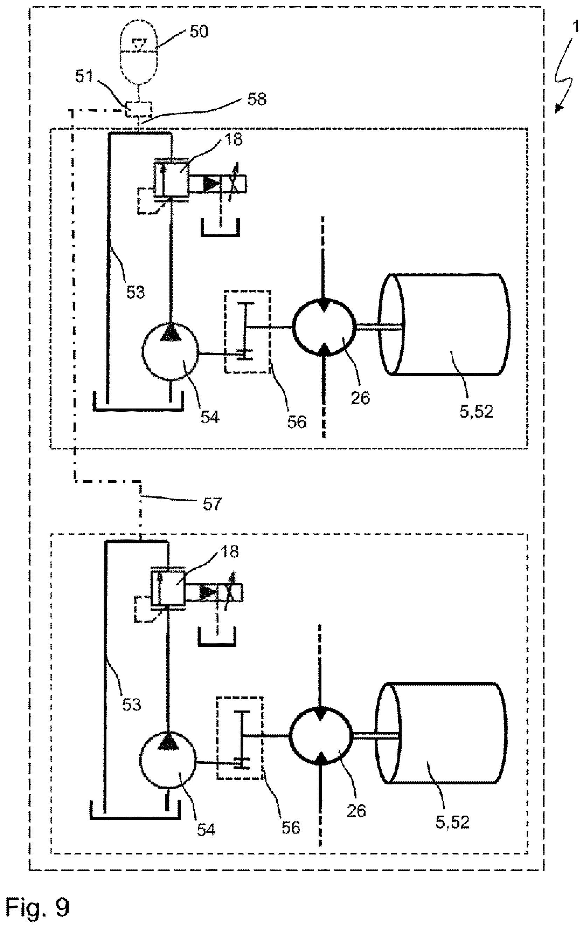

Figur 9 veranschaulicht ein gegenüber dem Ausführungsbeispiel alternatives oder ergänzendes Antriebskonzept. Die Besonderheit hier liegt darin, dass der Fahrmotor 26, der ebenfalls in einen in der Fig. 9 nicht weiter dargestellten Fahrantriebshydraulikkreislauf eingebunden ist, mit einem Übersetzungsgetriebe 56, beispielsweise ein Zahnradgetriebe, an eine bremshydraulikpumpe 54 eines separaten Bremshydraulikkreislaufes mit entsprechender Drossel 18 angeschlossen ist. Damit kann, wie in der Figur 9 auch gezeigt, jeder einzelnen Fahreinrichtung, insbesondere einer jeden einzelnen Verdichtungsbandage 5 der Verdichtungsmaschine 1, ein eigener Bremshydraulikkreislauf zugeordnet werden und die durch den Bremshydraulikkreislauf erzeugt Bremswirkung individuell gesteuert werden. In diesem Fall stellt der Fahrmotor 26 eine die Fahreinrichtung 52 direkt antreibende Einrichtung dar.

Auch hier kann optional ein Hydraulikspeicher 50 mit einem Speicherladeventil 51 vorgesehen sein, wobei es möglich ist, jedem der beiden Bremshydraulikkreisläufe 53 jeweils einen eigenen und damit zueinander separaten Hydraulikspeicher 50 oder, wie in Fig. 9 gezeigt, beiden Bremshydraulikkreisläufen 53 (oder auch mehr als zwei) einen gemeinsamen Hydraulikspeicher 50 zuzuordnen. Der gemeinsame Hydraulikspeicher 50 ist dazu über entsprechende Verbindungsleitungen 57, 58, die vorliegend in einem gemeinsamen Speicherladeventil 51 zusammengeführt werden, die aber auch über einzelne zueinander unabhängige Speicherladeventile 51 an den Hydraulikspeicher angeschlossen werden können, mit den beiden Bremshydraulikkreisläufen verbunden. Es versteht sich, dass die in Fig. 9 für zwei Fahreinrichtungen in einer Verdichtungsmaschine 1 vorgesehenen Anordnungen auch nur für eine einzige Fahreinrichtung einer Verdichtungsmaschine vorgesehen sein können.

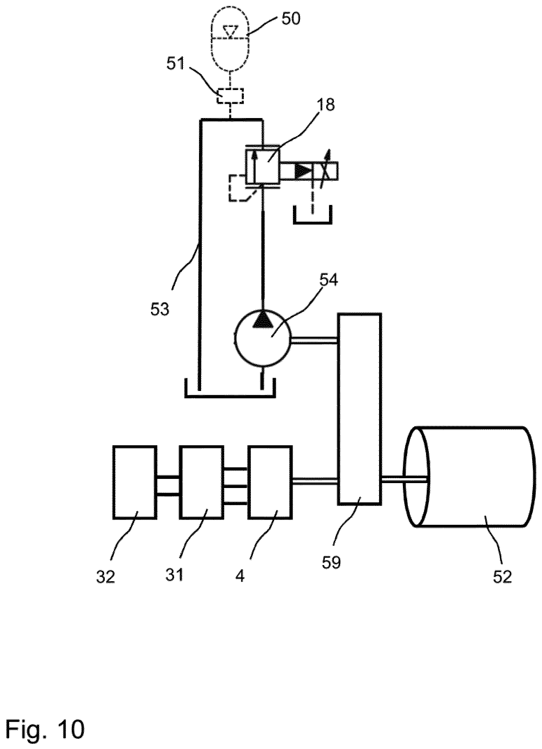

Bei dem in der Figur 10 gezeigten Antriebskonzept liegt eine der Besonderheiten insbesondere darin, dass die Fahreinrichtung 52 praktisch direkt vom Elektromotor 4, insbesondere ohne Zwischenschaltung einer hydraulischen Übertragungsstufe, angetrieben wird, wobei hierzu ein Übertragungsgetriebe 59 zwischengeschaltet ist. Über dieses Übertragungsgetriebe steht der Elektromotor in mechanischer Kopplung zur Bremshydraulikpumpe 54 und den weiteren Komponenten 53 und 18, wie zur Fig. 9 bereits erläutert. Auch für diese Ausführungsform kann optional ein Hydraulikspeicher 50 über ein Speicherladeventil 51 an den Bremshydraulikkreislauf angeschlossen werden.

Für sämtliche der in den Ausführungsbeispielen beschriebenen Varianten mit Hydraulikspeicher 50 ist es ferner möglich, weitere Hydraulikleitungsabzweigungen vorzusehen, was in den Figuren jedoch nicht gezeigt ist. Diese Hydraulikleitungsabzweigungen können dazu ausgebildet sein, im Hydraulikspeicher 50 gespeicherte hydraulische Energie weitere Verbrauchern, beispielsweise Arbeitsaggregaten, wie ein Kantenschneidgerät etc., zuzuführen und/oder Zusatzfunktionalitäten zu ermöglichen, wie beispielsweise eine Boost-Funktion für den Fahrantrieb.

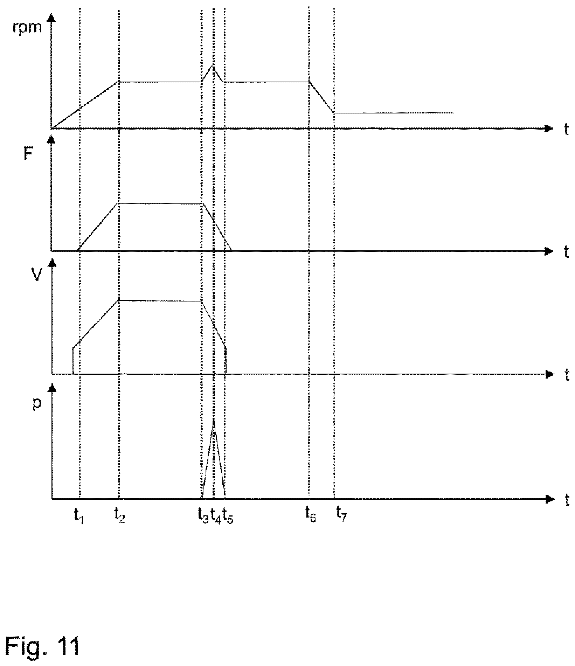

Die Fig. 11 schließlich veranschaulicht den beispielhaften Verlauf der Drehzahl rpm des Elektromotors, dem Verlauf der Fahrgeschwindigkeit, dem Fördervolumen V der Fahrpumpe 12 sowie dem Druck p zwischen der Pumpe 13/54 und der Drossel 18 für das in der Figur 4 gezeigte Ausführungsbeispiel. Der gezeigte Größenverlauf betrifft dabei eine Situation, in der die Verdichtungsmaschine auf horizontalem Untergrund anfährt und beschleunigt (t1 bis t2), mit konstanter Fahrgeschwindigkeit fährt (t2 bis t3) und anschließend wieder bis zum Stand abbremst (t3 bis t5). Ergänzend zu den vorstehenden Ausführungen ist hier wichtig, dass mit Hilfe des über die Drossel 18 aufgebauten Druckes (t3 bis t4) gebremst wird und gleichzeitig ein Drehzahlanstieg des Elektromotors erheblich abgemildert wird. Für einen effektiven Bremsvorgang wird gleichzeitig das Fördervolumen V der Fahrpumpe gesenkt. Damit kann insgesamt ein Überschießen der Drehzahl des Elektromotors auch in dieser Betriebssituation vermieden werden und gleichzeitig mithilfe des über die Drossel erzeugten Bremsmomentes die Verdichtungsmaschine abgebremst werden.

Insgesamt ermöglicht die vorliegende Erfindung bei einer Verdichtungsmaschine mit einem Hydrauliksystem, die über einen Elektromotor angetrieben wird und keinen Verbrennungsmotor als Fahrantrieb mehr aufweist, ein effizientes und zuverlässiges Bremsen durch eine mechanisch-hydraulische Kupplung mit einer Drossel. Dadurch, dass diese Drossel außerhalb des Fahrantriebshydraulikkreislaufs angeordnet ist, ergeben sich eine Reihe von Vorteilen, die vorstehend bereits erwähnt worden sind.

## Patentansprüche

1. Verfahren (40) zum Abbremsen einer mittels eines Elektromotors (4) betriebenen Verdichtungsmaschine (1), insbesondere Tandemwalze, Walzenzug, Gummiradwalze oder Müllverdichter, umfassend die Schritte:
a) Direktes oder indirektes elektromotorisches Antreiben einer Fahreinrichtung (52);
b) Bestimmen (43) eines Ist-Werts eines Betriebsparameters, wobei der Betriebsparameter eine Fahrgeschwindigkeit der Verdichtungsmaschine (1) ist;
c) Bestimmen (44) eines Soll-Werts des Betriebsparameters;
d) Vergleichen (45) des Ist-Wertes des Betriebsparameters mit dem Soll-Wert des Betriebsparameters;
e) Erzeugen (46) eines Bremsmomentes durch eine hydraulische Drossel (18) in einem Bremshydraulikkreislauf (53), wobei der Bremshydraulikkreislauf eine Bremshydraulikpumpe (54) umfasst, falls der Ist-Wert des Betriebsparameters von dem Soll-Wert abweicht, insbesondere größer ist als der Soll-Wert des Betriebsparameters, wobei die Drossel (18) in einer Hydraulikleitung mit einer Hydraulikpumpe angeordnet ist;
f) Übertragen des Bremsmomentes über eine mechanische Kopplung (11) von der Bremshydraulikpumpe (54) auf eine die Fahreinrichtung (52) direkt oder indirekt antreibende Einrichtung (55).

2. Verfahren (40) nach Anspruch 1,
**dadurch gekennzeichnet,**
**dass** ein weiterer Betriebsparameter ergänzend zur Fahrgeschwindigkeit der Verdichtungsmaschine (1)
- eine Drehzahl des Elektromotors (4) und/oder
- eine Temperatur des Elektromotors (4) und/oder eines Umrichters (31) und/oder einer Batterie (32) und/oder
- ein Ladungszustand einer Batterie (32) und/oder
- eine an einem Elektromotor (4) und/oder einem Umrichter (31) anliegende oder abgegebene Stromstärke und/oder
- ein Drehmoment am Elektromotor (4) oder
- ein hiermit korrelierender Parameter
ist.

3. Verfahren gemäß einem der vorhergehenden Ansprüche, wobei die Verdichtungsmaschine ein Hydrauliksystem (6) umfasst, insbesondere eine Tandemwalze, ein Walzenzug, eine Gummiradwalze oder ein Müllverdichter ist, umfassend die Schritte:
- im Schritt a) ein Antreiben (41) einer Fahrpumpe (12) in einem Fahrantriebshydraulikkreislauf (16) der Verdichtungsmaschine (1) durch den Elektromotor (4);
- zusätzlich ein Antreiben (42) einer Lenk-Speisepumpe (13) in einem Lenkhydraulikkreislauf (19) der Verdichtungsmaschine (1), wobei die Lenk-Speisepumpe (13) ebenfalls Hydraulikfluid in den Fahrantriebshydraulikkreislauf (16) einspeist, und wobei die Lenk-Speisepumpe (13) über eine mechanische Kopplung (11) mit der Fahrpumpe (12) gekoppelt ist;
- im Schritt e) ein Erzeugen (46) eines Bremsmomentes an der Lenk-Speisepumpe (13) durch eine hydraulische Drossel (18), falls der Ist-Wert des Betriebsparameters von dem Soll-Wert abweicht, insbesondere größer ist als der Soll-Wert des Betriebsparameters, wobei die Drossel (18) in einer Hydraulikleitung (25) zwischen der Lenk-Speisepumpe (13) und einer Lenkeinrichtung (27) im Lenkhydraulikkreislauf (19) angeordnet ist; und
- im Schritt f) ein Übertragen (47) des Bremsmomentes von der Lenk-Speisepumpe (13) über die mechanische Kopplung (11) auf die Fahrpumpe (12) des Fahrantriebshydraulikkreislaufs (16).

4. Verfahren (40) nach einem der vorhergehenden Ansprüche,
**dadurch gekennzeichnet,**
**dass** während des Übertragens (47) des Bremsmomentes ein Reduzieren (48) eines Schluckvolumens (V) der Fahrpumpe (12) durchgeführt wird.

5. Verfahren (40) nach einem der vorhergehenden Ansprüche,
**dadurch gekennzeichnet,**
**dass** ein Toleranzbereich vorgesehen ist, derart, dass das Erzeugen (46) des Bremsmomentes an der Lenk-Speisepumpe (13) erst dann durchgeführt wird, wenn der Ist-Wert des Betriebsparameters einen über dem Soll-Wert des Betriebsparameters liegenden Schwellenwert überschreitet, und/oder
**dass** eine Toleranzzeit vorgesehen ist, derart, dass das Erzeugen (46) des Bremsmomentes an der Lenk-Speisepumpe (13) erst dann durchgeführt wird, wenn der Ist-Wert des Betriebsparameters länger gegenüber dem Soll-Wert des Betriebsparameters erhöht ist als die Toleranzzeit.

6. Verfahren (40) nach dem vorhergehenden Anspruch,
**dadurch gekennzeichnet,**
**dass** der Toleranzbereich und/oder die Toleranzzeit von der Steuereinrichtung (10) dynamisch an den Ist-Wert des Betriebsparameters angepasst wird.

7. Verfahren (40) nach zumindest Anspruch 3 und einem der vorhergehenden Ansprüche 4-6,
**dadurch gekennzeichnet,**
**dass** das an der Lenk-Speisepumpe (13) eingestellte Bremsmoment so lange erhöht wird, wie sich die Differenz zwischen dem Ist-Wert des Betriebsparameters und dem Soll-Wert des Betriebsparameters erhöht, wobei nach einer Erhöhung des Bremsmoments das Bremsmoment so lange konstant gehalten wird, bis der Ist-Wert des Betriebsparameters wieder auf oder unter den Soll-Wert des Betriebsparameters abgesunken ist.

8. Verfahren (40) nach zumindest Anspruch 3 und einem der vorhergehenden Ansprüche 4-7,
**dadurch gekennzeichnet,**
**dass** das Hydrauliksystem (6) einen von dem Fahrantriebshydraulikkreislauf (16) und dem Lenkhydraulikkreislauf (19) separaten Arbeitshydraulikkreislauf (17) umfasst, wobei der Arbeitshydraulikkreislauf (17) ausschließlich von einer von der Lenk-Speisepumpe (13) separaten Arbeitspumpe (14) betrieben wird.

9. Verfahren (40) nach zumindest Anspruch 3 und einem der vorhergehenden Ansprüche 4-8,
**dadurch gekennzeichnet,**
**dass** ein Bestimmen einer Temperatur im Lenkhydraulikkreislauf (19) durchgeführt wird, und dass kein Bremsmoment an der Lenk-Speisepumpe (13) durch die hydraulische Drossel (18) erzeugt wird, wenn die Temperatur im Lenkhydraulikkreislauf (19) größer ist als ein vorgegebener Schwellenwert.

10. Verfahren (40) nach zumindest Anspruch 3 und einem der vorhergehenden Ansprüche 4-9,
**dadurch gekennzeichnet,**
**dass** ein Rücklauf des Lenkhydraulikkreislaufs (19) und ein Rücklauf des Fahrantriebshydraulikkreislaufs (16) zusammengeführt und gemeinsam in einen Tank (15) eingeleitet wird.

11. Verfahren (40) gemäß einem der vorhergehenden Ansprüche,
**dadurch gekennzeichnet,**
**dass** beim Übertragen des Bremsmomentes über die mechanische Kopplung (11) von der Pumpe auf die die Fahreinrichtung (52) direkt oder indirekt antreibende Einrichtung, insbesondere Fahrpumpe oder Fahrmotor, eine Drehzahlübersetzung erfolgt.

12. Verfahren (40) gemäß einem der vorhergehenden Ansprüche,
**dadurch gekennzeichnet,**
**dass** der Fahrhydraulikmotor über eine mechanische Kopplung mit einer, insbesondere mit verstellbarem Fördervolumen ausgebildeten, Bremshydraulikpumpe koppelbar ist, wobei die Bremshydraulikpumpe Teil eines vom Fahrantriebshydraulikkreislauf (16) separaten Bremshydraulikkreislaufes ist, und wobei die hydraulische Drossel (18), insbesondere stromabwärts der Bremshydraulikpumpe, im Bremshydraulikkreislauf angeordnet ist, mit dem Schritt, dass das Erzeugen (46) des Bremsmomentes an der Bremshydraulikpumpe durch die hydraulische Drossel (18) erfolgt, und dass ein Übertragen (47) des Bremsmomentes von der Bremshydraulikpumpe über die mechanische Kopplung (11) auf den Fahrhydraulikmotor des Fahrantriebshydraulikkreislaufs (16) erfolgt.

13. Verfahren (40) nach einem der vorhergehenden Ansprüche,
**dadurch gekennzeichnet,**
**dass** der Bremshydraulikkreislauf einen, insbesondere stromabwärts der hydraulischen Drossel (18) über ein Speicherladeventil (51) angeschlossenen Hydraulikspeicher (50) umfasst, wobei das Laden des Hydraulikspeichers (50) durch im Bremshydraulikkreislauf von der Bremshydraulikpumpe gefördertes Hydraulikfluid erfolgt.

14. Verdichtungsmaschine (1), insbesondere Tandemwalze, Walzenzug, Gummiradwalze oder Müllverdichter, mit einem Hydrauliksystem (6), einem Elektromotor (4) und einer Steuereinrichtung (10),
**dadurch gekennzeichnet,**
**dass** die Steuereinrichtung (10) zur Durchführung des Verfahrens (40) nach einem der vorhergehenden Ansprüche ausgebildet ist, wobei die Steuereinrichtung (10) ist dazu ausgebildet, eine Soll-Fahrgeschwindigkeit der Verdichtungsmaschine (1) zu bestimmen, insbesondere aus einer Einstellung eines Bedienelementes der Verdichtungsmaschine (1);
und wobei die Steuereinrichtung (10) dazu ausgebildet ist, ein Bremsmoment an einer Lenk-Speisepumpe (13) durch eine hydraulische Drossel (18) zu erzeugen, wenn die Ist-Fahrgeschwindigkeit größer ist als die Soll-Fahrgeschwindigkeit.

15. Verdichtungsmaschine (1) nach dem vorhergehenden Anspruch,
**dadurch gekennzeichnet,**
**dass** sie wenigstens eines der folgenden Merkmale aufweist:
- sie weist einen Fahrantriebshydraulikkreislauf (16) mit einer vom Elektromotor (4) angetriebenen Fahrpumpe (12) auf, wobei die Fahrpumpe (12) insbesondere als Verstellpumpe ausgebildet ist;
- sie weist eine, insbesondere vom Elektromotor (4) angetriebene, Lenk-Speisepumpe (13) in einem Lenkhydraulikkreislauf (19) auf, wobei die Lenk-Speisepumpe (13) insbesondere als Konstantpumpe, beispielsweise als Zahnradpumpe, ausgebildet ist;
- die Lenk-Speisepumpe (13) ist zur Einspeisung von Hydraulikfluid in den Fahrantriebshydraulikkreislauf (16), der insbesondere als geschlossener Kreislauf ausgebildet ist, ausgebildet;
- die Fahrpumpe (12) ist über eine mechanische Koppelung (11) mit der Lenk-Speisepumpe (13) gekoppelt;
- in einer Hydraulikleitung (25) zwischen der Lenk-Speisepumpe (13) und einer Lenkeinrichtung (27) des Lenkhydraulikkreislaufs (19) ist eine hydraulische Drossel (18) angeordnet;
- die hydraulische Drossel (18) ist als Proportional-Druckbegrenzungsventil ausgebildet;
- die hydraulische Drossel (18) ist von der Steuereinrichtung (10) steuerbar ausgebildet;
- es ist ein von dem Fahrantriebshydraulikkreislauf (16) und dem Lenkhydraulikkreislauf (19) separater Arbeitshydraulikkreislauf (17) mit einer Arbeitspumpe (14) vorgesehen, wobei die Arbeitspumpe (14) insbesondere mit dem Elektromotor (4) antriebsverbunden ist;
- die Lenk-Speisepumpe (13) und die von ihr versorgten Hydraulikleitungen sind prioritätsventilfrei ausgebildet;
- es ist ein Drehzahlsensor (24) am Elektromotor (4) und/oder an einem Fahrmotor (26) des Fahrantriebshydraulikkreislaufs (16) vorgesehen, der mit der Steuereinrichtung (10) verbunden ist;
- der Drehzahlsensor (24) ist dazu ausgebildet, eine Ist-Drehzahl des Elektromotors (4) und/oder eine Ist-Fahrgeschwindigkeit der Verdichtungsmaschine (1) oder einen hiermit korrelierenden Parameter zu bestimmen;
- es ist ein Temperatursensor (33) am Elektromotor (4) und/oder an einem Umrichter (31) und/oder an einer Batterie (32) vorgesehen, der mit der Steuereinrichtung (10) verbunden ist, und der insbesondere dazu ausgebildet ist, eine Ist-Temperatur des Elektromotors (4) und/oder des Umrichters (31) und/oder der Batterie (32) zu bestimmen;
- es ist ein Ladungszustandssensor (34) an der Batterie (32) vorgesehen, der mit der Steuereinrichtung (10) verbunden ist, und der insbesondere dazu ausgebildet ist, einen Ist-Ladungszustand der Batterie (32) zu bestimmen;
- es ist ein Amperemeter (35) am Elektromotor (4) und/oder am Umrichter (31) vorgesehen, das mit der Steuereinrichtung (10) verbunden ist, und das insbesondere dazu ausgebildet ist, eine Ist-Stromstärke durch den Elektromotor (4) und/oder durch den Umrichter (31) zu bestimmen;
- es ist ein Drehmomentsensor (36) am Elektromotor (4) vorgesehen, der mit der Steuereinrichtung (10) verbunden ist, und der insbesondere dazu ausgebildet ist, ein Ist-Drehmoment des Elektromotors (4) zu bestimmen;
- es ist ein Temperatursensor (37) im Lenkhydraulikkreislauf (19) vorgesehen, der mit der Steuereinrichtung (10) verbunden ist, und der insbesondere dazu ausgebildet ist, eine Ist-Temperatur des Lenkhydraulikkreislaufs (19) zu bestimmen;
- die Steuereinrichtung (10) ist dazu ausgebildet, einen Soll-Wert eines Betriebsparameters, zusätzlich eine Soll-Drehzahl des Elektromotors (4) oder einen mit der Soll-Fahrgeschwindigkeit der Verdichtungsmaschine (1) korrelierenden Parameter, zu bestimmen, insbesondere aus einer Einstellung eines Bedienelementes der Verdichtungsmaschine (1);
- die Steuereinrichtung (10) ist auch dazu ausgebildet, ein Bremsmoment an der Lenk-Speisepumpe (13) durch die hydraulische Drossel (18) zu erzeugen, wenn die Ist-Drehzahl und/oder der mit der Ist-Fahrgeschwindigkeit korrelierende Parameter größer ist als die Soll-Drehzahl und/oder der mit der Soll-Fahrgeschwindigkeit korrelierende Parameter:
- ein Rücklauf des Lenkhydraulikkreislaufs (19) und ein Rücklauf des Fahrantriebshydraulikkreislaufs (16) sind gemeinsam in einen Tank (15) mündend ausgebildet;
- einen Hydraulikspeicher (50), der über ein Speicherladeventil (51) an den Lenkhydraulikkreislauf (19) angeschlossen ist.

16. Verdichtungsmaschine (1) nach einem der vorhergehenden Ansprüche 14 oder 15,
**dadurch gekennzeichnet,**
**dass** sie wenigstens eines der folgenden Merkmale aufweist:
- sie umfasst eine mittels eines Hydraulikmotors, insbesondere über eine Welle direkt, angetriebene Fahreinrichtung (52) und eine mechanisch an diesen Hydraulikmotor, insbesondere über eine Übersetzungsstufe, gekoppelte Bremshydraulikpumpe (54) des Bremshydraulikkreislaufes (53);
- sie umfasst eine mittels eines Elektromotors, insbesondere über eine Welle direkt, angetriebene Fahreinrichtung (52) und ein Kopplungsgetriebe, über dass der Elektromotor an eine Bremshydraulikpumpe eines Bremshydraulikkreislaufes mechanisch koppelbar ist, wobei der Bremshydraulikkreislauf die hydraulische Drossel (18), insbesondere stromabwärts der Bremshydraulikpumpe, umfasst.

17. Verdichtungsmaschine (1) nach einem der vorhergehenden Ansprüche 14, 15 oder 16,
**dadurch gekennzeichnet,**
**dass** jede der Fahreinrichtungen (52), insbesondere jede der Verdichtungsbandagen (9), einen eigenen, zueinander separaten Bremshydraulikkreislauf umfasst und weiter wenigstens eines der folgenden Merkmale aufweist:
- Jedem Bremshydraulikkreislauf ist ein separater Hydraulikspeicher zugeordnet;
- es ist ein gemeinsamer Hydraulikspeicher vorhanden, der über jeweils eine Zufuhrleitung über jeweils ein oder ein gemeinsames Speicherladeventil mit wenigstens zwei Bremshydraulikkreisläufen verbunden ist;
- die Drosseln der beiden Bremshydraulikkreisläufe sind unabhängig voneinander ansteuerbar und die Steuereinrichtung (10) ist derart ausgebildet, dass sie die beiden Drosseln unabhängig voneinander und/oder unter Berücksichtigung der aktuellen Fahrrichtung, steuert.

## Claims

1. A method (40) for braking a compaction machine (1) operated by an electric motor (4), in particular a tandem roller, single-drum roller, rubber-tired roller or waste compactor, comprising the steps of:
a) directly or indirectly driving a travel unit (52) using an electric motor;
b) determining (43) an actual value of an operating parameter, the operating parameter being a travel speed of the compaction machine (1);
c) determining (44) a target value of the operating parameter;
d) comparing (45) the actual value of the operating parameter with the target value of the operating parameter;
e) generating (46) a braking torque by a hydraulic throttle (18) in a brake hydraulic circuit (53), the brake hydraulic circuit comprising a brake hydraulic pump (54), if the actual value of the operating parameter deviates from the target value, in particular is greater than the target value of the operating parameter, the throttle (18) being arranged in a hydraulic line with a hydraulic pump;
f) transmitting the braking torque via a mechanical coupling (11) from the brake hydraulic pump (54) to a device directly or indirectly driving the travel unit.

2. The method (40) according to claim 1,
**characterized in**
**that** a further operating parameter in addition to the travel speed of the compaction machine (1) is
a rotational speed of the electric motor (4); and/or
a temperature of the electric motor (4) and/or a converter (31) and/or a battery (32); and/or
a state of charge of a battery (32); and/or
an amperage applied to or output at an electric motor (4) and/or a converter (31); and/or
a torque at the electric motor (4); or
a parameter correlating therewith.

3. The method (40) according to any of the preceding claims, wherein the compaction machine comprises a hydraulic system (6), in particular is a tandem roller, a single-drum roller, a rubber-tired roller or a waste compactor, comprising the steps of:
in step a), driving (41) a traction pump (12) in a traction drive hydraulic circuit (16) of the compaction machine (1) by the electric motor (4);
additionally driving (42) a steering feed pump (13) in a steering hydraulic circuit (19) of the compaction machine (1), wherein the steering feed pump (13) also feeds hydraulic fluid into the traction drive hydraulic circuit (16), and wherein the steering feed pump (13) is coupled to the traction pump (12) via a mechanical coupling (11);
in step e), generating (46) a braking torque at the steering feed pump (13) by a hydraulic throttle (18) if the actual value of the operating parameter deviates from the target value, in particular is greater than the target value of the operating parameter, the throttle (18) being arranged in a hydraulic line (25) between the steering feed pump (13) and a steering device (27) in the steering hydraulic circuit (19); and
in step f), transmitting (47) the braking torque from the steering feed pump (13) to the traction pump (12) of the traction drive hydraulic circuit (16) via the mechanical coupling (11).

4. The method (40) according to any of the preceding claims,
**characterized in**
**that** during transmitting (47) of the braking torque, reducing (48) of a displacement of the traction pump (12) is performed.

5. The method (40) according to any of the preceding claims,
**characterized in**
**that** a tolerance range is provided such that generating (36) of the braking torque at the steering feed pump (13) is only performed when the actual value of the operating parameter exceeds a threshold value above the target value of the operating parameter; and/or
a tolerance time is provided such that generating of the braking torque at the steering feed pump (13) is only performed when the actual value of the operating parameter is increased compared to the target value of the operating parameter for longer than the tolerance time.

6. The method (40) according to the preceding claim,
**characterized in**
**that** the tolerance range and/or the tolerance time is dynamically adapted to the actual value of the operating parameter by the control device (10).

7. The method (40) according to at least claim 3 and one of the preceding claims 4 to 6,
**characterized in**
**that** the braking torque set at the steering feed pump (13) is increased as long as the difference between the actual value of the operating parameter and the target value of the operating parameter increases, wherein the braking torque is kept constant after an increase in the braking torque until the actual value of the operating parameter has fallen back to or below the target value of the operating parameter.

8. The method (40) according to at least claim 3 and one of the preceding claims 4 to 7,
**characterized in**
**that** the hydraulic system (6) comprises a working hydraulic circuit (17) separate from the traction drive hydraulic circuit (16) and the steering hydraulic circuit (19), the working hydraulic circuit (17) being operated exclusively by a working pump (14) separate from the steering feed pump (13).

9. The method (40) according to at least claim 3 and one of the preceding claims 4 to 8,
**characterized in**
**that** determining of a temperature in the steering hydraulic circuit (19) is performed, and no braking torque is generated at the steering feed pump (13) by the hydraulic throttle (18) when the temperature in the steering hydraulic circuit (19) is greater than a predetermined threshold value.

10. The method (40) according to at least claim 3 and one of the preceding claims 4 to 9,
**characterized in**
**that** a return path of the steering hydraulic circuit (19) and a return path of the traction drive hydraulic circuit (16) are merged and fed together into a tank (15).

11. The method (40) according to one of the preceding claims,
**characterized in**
**that** when the braking torque is transmitted via the mechanical coupling (11) from the pump to the device directly or indirectly driving the travel unit (52), in particular the traction pump or traction motor, a speed transmission takes place.

12. The method (40) according to one of the preceding claims,
**characterized in**
**that** the hydraulic traction motor can be coupled via a mechanical coupling to a brake hydraulic pump, in particular configured with adjustable delivery volume, the brake hydraulic pump being part of a brake hydraulic circuit separate from the traction drive hydraulic circuit (16), and the hydraulic throttle (18) being arranged in the brake hydraulic circuit, in particular downstream of the brake hydraulic pump, with the step that generating (46) of the braking torque is performed at the brake hydraulic pump by the hydraulic throttle (18), and that transmitting (47) of the braking torque from the brake hydraulic pump via the mechanical coupling (11) to the hydraulic traction motor of the traction drive hydraulic circuit (16) is performed.

13. The method (40) according to one of the preceding claims,
**characterized in**
**that** the brake hydraulic circuit comprises a hydraulic accumulator (50) connected, in particular, downstream of the hydraulic throttle (18) via an accumulator charging valve (51), the hydraulic accumulator (5) being charged by hydraulic fluid delivered in the brake hydraulic circuit by the brake hydraulic pump.

14. A compaction machine (1), in particular a tandem roller, single-drum roller, rubber-tired roller or waste compactor, with a hydraulic system (6), an electric motor (4) and a control device,
**characterized in**
**that** the control device (10) is configured for carrying out the method (40) according to one of the preceding claims, wherein the control unit (10) is configured to determine a traget travel speed of the compaction machine (1), in particular based on a positioning of an operating element of the compaction machine (1); and wherein the control device (10) is configured to generate a braking torque at a steering feed pump (13) by a hydraulic throttle (18) when the actual travel speed is greater than the target travel speed.

15. The compaction machine (1) according to the preceding claim,
**characterized in**
**that** it comprises at least one of the following features:
it has a traction drive hydraulic circuit (16) with a traction pump (12) driven by the electric motor (4), the traction pump (12) being configured in particular as a variable displacement pump;
it has a steering feed pump (13), driven in particular by the electric motor (4), in a steering hydraulic circuit (19), the steering feed pump (13) being configured in particular as a fixed displacement pump, for example as a gear pump;
the steering feed pump (13) is configured to feed hydraulic fluid into the traction drive hydraulic circuit (16), which is in particular configured as a closed circuit;
the traction pump (12) is coupled to the steering feed pump (13) via a mechanical coupling (11);
a hydraulic throttle (18) is arranged in a hydraulic line (25) between the steering feed pump (13) and a steering device (27) of the steering hydraulic circuit (19);
the hydraulic throttle (18) is configured as a proportional pressure-limiting valve;
the hydraulic throttle (18) is configured to be controllable by the control device (10);
a working hydraulic circuit (17) separate from the traction drive hydraulic circuit (16) and the steering hydraulic circuit (19) and having a working pump (14) is provided, the working pump (14) in particular being in drive connection with the electric motor (4);
the steering feed pump (13) and the hydraulic lines it supplies are free of priority valves;
a speed sensor (24) is provided at the electric motor (4) and/or at a traction motor (26) of the traction drive hydraulic circuit (16), which is connected to the control device (10);
the speed sensor (24) is configured to determine an actual speed of the electric motor (4) and/or an actual travel speed of the compaction machine (1) or a parameter correlating therewith;
a temperature sensor (33) is provided at the electric motor (4) and/or at a converter (31) and/or at a battery (32), which is connected to the control device (10) and which is configured in particular to determine an actual temperature of the electric motor (4) and/or of the converter (31) and/or of the battery (32);
a state of charge sensor (34) is provided at the battery (32), which is connected to the control device (10) and which is configured in particular to determine an actual state of charge of the battery (32);
an amperemeter (35) is provided at the electric motor (4) and/or at the converter (31), which is connected to the control device (10) and which is configured in particular to determine an actual amperage through the electric motor (4) and/or through the converter (31);
a torque sensor (36) is provided at the electric motor (4), which is connected to the control device (10) and which is configured in particular to determine an actual torque of the electric motor (4);
a temperature sensor (37) is provided in the steering hydraulic circuit (19), which is connected to the control device (10) and which is configured in particular to determine an actual temperature of the steering hydraulic circuit (19);
the control device (10) is configured to determine a target value of an operating parameter, in addition a target speed of the electric motor (4) or a parameter correlating with a target travel speed of the compaction machine (1), in particular from a setting of an operating element of the compaction machine (1);
the control device (10) is also configured to generate a braking torque at the steering feed pump (13) by the hydraulic throttle (18) if the actual speed and/or the parameter correlating with the actual speed is greater than the target speed and/or the value of the parameter correlating with the target travel speed;
a return path of the steering hydraulic circuit (19) and a return path of the traction drive hydraulic circuit (16) configured such that they open together into a tank (15);
a hydraulic accumulator (50) is connected to the steering hydraulic circuit (19) via an accumulator charging valve (51).

16. The ground compaction machine (1) according to one of claims 14 or 15,
**characterized in**
**that** it has at least one of the following features:
it comprises a travel unit (52) driven by a hydraulic motor, in particular directly via a shaft, and a brake hydraulic pump (54) of the brake hydraulic circuit (53) coupled mechanically to this hydraulic motor, in particular via a transmission stage;
it comprises a travel unit (52) driven by an electric motor (4), in particular directly via a shaft, and a coupling gearbox via which the electric motor (4) can be mechanically coupled to a brake hydraulic pump (54) of a brake hydraulic circuit (53), the brake hydraulic circuit (53) comprising the hydraulic throttle (18), in particular downstream of the brake hydraulic pump (54).

17. The ground compaction machine (1) according to one of claims 14, 15, or 16,
**characterized in**
**that** each of the travel units (52), in particular each of the compaction drums (9), has its own brake hydraulic circuit (53) separate from the other ones, and further has at least one of the following features:
a separate hydraulic accumulator is assigned to each brake hydraulic circuit (53);
a common hydraulic accumulator is provided, which is connected, in each case via a respective supply line, to at least two brake hydraulic circuits (53), in each case via a respective accumulator charging valve or via a common accumulator charging valve;
the throttles of the two brake hydraulic circuits (53) can be controlled independently of one another, and the control device is configured such that it controls the two throttles independently of one another and/or taking into account the current direction of travel.

## Revendications

1. Procédé (40) de freinage d'un engin de compactage (1), en particulier d'un compacteur tandem, d'un compacteur monocylindre, d'un compacteur à pneumatiques ou d'un compacteur de déchets, actionné au moyen d'un moteur électrique (4), comprenant les étapes consistant à :
a) entraîner directement ou indirectement par moteur électrique un dispositif de déplacement (52) ;
b) déterminer (43) une valeur réelle d'un paramètre de fonctionnement, le paramètre de fonctionnement étant une vitesse de déplacement de l'engin de compactage (1) ;
c) déterminer (44) une valeur de consigne du paramètre de fonctionnement ;
d) comparer (45) la valeur réelle du paramètre de fonctionnement avec la valeur de consigne du paramètre de fonctionnement ;
e) générer (46) un couple de freinage via un étrangleur hydraulique (18) dans un circuit hydraulique de freinage (53), le circuit hydraulique de freinage comprenant une pompe hydraulique de freinage (54), si la valeur réelle du paramètre de fonctionnement s'écarte de la valeur de consigne, en particulier si elle est supérieure à la valeur de consigne du paramètre de fonctionnement, l'étrangleur (18) étant disposé dans un conduit hydraulique muni d'une pompe hydraulique ;
f) par l'intermédiaire d'un couplage mécanique (11), transmettre le couple de freinage de la pompe hydraulique de freinage (54) à un dispositif (55) entraînant directement ou indirectement le dispositif de déplacement (52).

2. Procédé (40) selon la revendication 1,
**caractérisé en ce que**
un autre paramètre de fonctionnement, en complément de la vitesse de déplacement de l'engin de compactage (7), est
- une vitesse de rotation du moteur électrique (4), et/ou
- une température du moteur électrique (4) et/ou d'un convertisseur (31) et/ou d'une batterie (32), et/ou
- un état de charge d'une batterie (32), et/ou
- une intensité de courant appliquée ou délivrée à un moteur électrique (4) et/ou à un convertisseur (31), et/ou
- un couple de rotation au niveau du moteur électrique (4), ou
- un paramètre corrélé.

3. Procédé selon l'une des revendications précédentes,
dans lequel l'engin de compactage comprend un système hydraulique (6), en particulier il est un compacteur tandem, un compacteur monocylindre, un compacteur à pneumatiques ou un compacteur de déchets, comprenant les étapes consistant à :
- à l'étape a), entraîner (41) une pompe de déplacement (12) dans un circuit hydraulique de déplacement (16) de l'engin de compactage (1) par le moteur électrique (4) ;
- en outre, entraîner (42) une pompe d'alimentation de direction (13) dans un circuit hydraulique de direction (19) de l'engin de compactage (1), la pompe d'alimentation de direction (13) alimentant également en fluide hydraulique le circuit hydraulique de déplacement (16), et la pompe d'alimentation de direction (13) étant couplée à la pompe de déplacement (12) par l'intermédiaire d'un couplage mécanique (11) ;
- à l'étape e), générer (46) un couple de freinage au niveau de la pompe d'alimentation de direction (13) via un étrangleur hydraulique (18), si la valeur réelle du paramètre de fonctionnement s'écarte de la valeur de consigne, en particulier si elle est supérieure à la valeur de consigne du paramètre de fonctionnement, l'étrangleur (18) étant disposé dans un conduit hydraulique (25) entre la pompe d'alimentation de direction (13) et un dispositif de direction (27) dans le circuit hydraulique de direction (19) ; et
- à l'étape f), transmettre (47) le couple de freinage de la pompe d'alimentation de direction (13) à la pompe de déplacement (12) du circuit hydraulique de déplacement (16) par l'intermédiaire du couplage mécanique (11).

4. Procédé (40) selon l'une des revendications précédentes,
**caractérisé en ce que**
pendant la transmission (47) du couple de freinage, un volume d'absorption (V) de la pompe de déplacement (12) est réduit (48).

5. Procédé (40) selon l'une des revendications précédentes,
**caractérisé en ce que**
il est prévu une plage de tolérance telle que la génération (46) du couple de freinage au niveau de la pompe d'alimentation de direction (13) n'est effectuée que lorsque la valeur réelle du paramètre de fonctionnement dépasse une valeur seuil supérieure à la valeur de consigne du paramètre de fonctionnement, et/ou
il est prévu un temps de tolérance tel que la génération (46) du couple de freinage au niveau de la pompe d'alimentation de direction (13) n'est effectuée que lorsque la valeur réelle du paramètre de fonctionnement est supérieure à la valeur de consigne du paramètre de fonctionnement, et ceci plus longtemps que le temps de tolérance.

6. Procédé (40) selon la revendication précédente,
**caractérisé en ce que**
la plage de tolérance et/ou le temps de tolérance sont adaptés dynamiquement à la valeur réelle du paramètre de fonctionnement par le dispositif de commande (10).

7. Procédé (40) selon au moins la revendication 3 et l'une des revendications précédentes 4 à 6,
**caractérisé en ce que**
le couple de freinage réglé au niveau de la pompe d'alimentation de direction (13) est augmenté aussi longtemps que la différence entre la valeur réelle du paramètre de fonctionnement et la valeur de consigne du paramètre de fonctionnement augmente, et, après une augmentation du couple de freinage, le couple de freinage est maintenu constant jusqu'à ce que la valeur réelle du paramètre de fonctionnement soit redescendue au niveau ou en dessous de la valeur de consigne du paramètre de fonctionnement.

8. Procédé (40) selon au moins la revendication 3 et l'une des revendications précédentes 4 à 7,
**caractérisé en ce que**
le système hydraulique (6) comprend un circuit hydraulique de travail (17) séparé du circuit hydraulique de déplacement (16) et du circuit hydraulique de direction (19), le circuit hydraulique de travail (17) étant actionné exclusivement par une pompe de travail (14) séparée de la pompe d'alimentation de direction (13).

9. Procédé (40) selon au moins la revendication 3 et l'une des revendications précédentes 4 à 8,
**caractérisé en ce que**
la température du circuit hydraulique de direction (19) est déterminée, et
**en ce qu'**aucun couple de freinage n'est généré via l'étrangleur hydraulique (18) au niveau de la pompe d'alimentation de direction (13) si la température du circuit hydraulique de direction (19) est supérieure à une valeur seuil prédéterminée.

10. Procédé (40) selon au moins la revendication 3 et l'une des revendications précédentes 4 à 9,
**caractérisé en ce que**
un retour du circuit hydraulique de direction (19) et un retour du circuit hydraulique de déplacement (16) sont réunis et injectés conjointement dans un réservoir (15).

11. Procédé (40) selon l'une des revendications précédentes,
**caractérisé en ce que**
lorsque le couple de freinage est transmis de la pompe au dispositif entraînant directement ou indirectement le dispositif de déplacement (52), en particulier la pompe de déplacement ou le moteur de déplacement, par l'intermédiaire du coupleur mécanique (11), il se produit une adaptation de la vitesse de rotation.

12. Procédé (40) selon l'une des revendications précédentes,
**caractérisé en ce que** le moteur hydraulique de déplacement peut être couplé à une pompe hydraulique de freinage, en particulier à débit réglable, par l'intermédiaire d'un coupleur mécanique, la pompe hydraulique de freinage faisant partie d'un circuit hydraulique de freinage séparé du circuit hydraulique de déplacement (16), et l'étrangleur hydraulique (8) étant disposé dans le circuit hydraulique de freinage, en particulier en aval de la pompe hydraulique de freinage,
comprenant l'étape consistant à générer (46) le couple de freinage au niveau de la pompe hydraulique de freinage via l'étrangleur hydraulique (18), et à transmettre (47) le couple de freinage de la pompe hydraulique de freinage au moteur hydraulique de déplacement du circuit hydraulique de déplacement (16) par l'intermédiaire du coupleur mécanique (11).

13. Procédé (40) selon l'une des revendications précédentes,
**caractérisé en ce que**
le circuit hydraulique de freinage comprend un accumulateur hydraulique (50), raccordé en particulier en aval de l'étrangleur hydraulique (18) par l'intermédiaire d'une vanne de chargement d'accumulateur (51), le chargement de l'accumulateur hydraulique (50) étant assuré par le fluide hydraulique pompé dans le circuit hydraulique de freinage par la pompe hydraulique de freinage.

14. Engin de compactage (1), en particulier compacteur tandem, compacteur monocylindre, compacteur à pneumatiques ou compacteur de déchets, comprenant un système hydraulique (6), un moteur électrique (4) et un dispositif de commande (10),
**caractérisé en ce que**
le dispositif de commande (10) est conçu pour mettre en œuvre le procédé (40) selon l'une des revendications précédentes, le dispositif de commande (10) étant conçu pour déterminer une vitesse de déplacement de consigne de l'engin de compactage (1), en particulier à partir du réglage d'un élément de manœuvre de l'engin de compactage (1) ; et le dispositif de commande (10) étant conçu pour générer un couple de freinage au niveau d'une pompe d'alimentation de direction (13) via un étrangleur hydraulique (18) si la vitesse de déplacement réelle est supérieure à la vitesse de déplacement de consigne.

15. Engin de compactage (1) selon la revendication précédente,
**caractérisé en ce que**
il présente au moins l'une des caractéristiques suivantes :
- il comporte un circuit hydraulique de déplacement (16) muni d'une pompe de déplacement (12) entraînée par le moteur électrique (4), la pompe de déplacement (12) étant conçue en particulier comme une pompe à cylindrée variable ;
- il comporte une pompe d'alimentation de direction (13), en particulier entraînée par le moteur électrique (4), dans un circuit hydraulique de direction (19), la pompe d'alimentation de direction (13) étant conçue en particulier comme une pompe à cylindrée fixe, par exemple une pompe à engrenages ;
- la pompe d'alimentation de direction (13) est conçue pour alimenter en fluide hydraulique le circuit hydraulique de déplacement (16), lequel est en particulier conçu comme un circuit fermé ;
- la pompe de déplacement (12) est couplée à la pompe d'alimentation de direction (13) par l'intermédiaire d'un coupleur mécanique (11) ;
- un étrangleur hydraulique (18) est disposé dans un conduit hydraulique (25) entre la pompe d'alimentation de direction (13) et un dispositif de direction (27) du circuit hydraulique de direction (19) ;
- l'étrangleur hydraulique (18) est conçu comme une soupape de limitation de pression proportionnelle ;
- l'étrangleur hydraulique (18) est conçu pour être commandé par le dispositif de commande (10) ;
- il est prévu un circuit hydraulique de travail (17), séparé du circuit hydraulique de déplacement (16) et du circuit hydraulique de direction (19), lequel est muni d'une pompe de travail (14), en particulier, la pompe de travail (14) étant reliée en entraînement au moteur électrique (4) ;
- la pompe d'alimentation de direction (13) et les conduits hydrauliques qu'elle alimente sont conçus sans valves de priorité ;
- il est prévu un capteur de vitesse de rotation (24) sur le moteur électrique (4) et/ou sur un moteur de déplacement (26) du circuit hydraulique de déplacement (16), lequel est connecté au dispositif de commande (10) ;
- le capteur de vitesse de rotation (24) est conçu pour déterminer la vitesse de rotation réelle du moteur électrique (4) et/ou la vitesse de déplacement réelle de l'engin de compactage (1), ou un paramètre corrélé ;
- il est prévu un capteur de température (33) sur le moteur électrique (4) et/ou sur un convertisseur (31) et/ou sur une batterie (32), qui est connecté au dispositif de commande (10) et conçu en particulier pour déterminer une température réelle du moteur électrique (4) et/ou du convertisseur (31) et/ou de la batterie (32) ;
- il est prévu un capteur d'état de charge (34) sur la batterie (32), lequel est connecté au dispositif de commande (10) et est en particulier conçu pour déterminer un état de charge réel de la batterie (32) ;
- il est prévu un ampèremètre (35) sur le moteur électrique (4) et/ou sur le convertisseur (31), lequel est connecté au dispositif de commande (10) et est en particulier conçu pour déterminer une intensité de courant réelle traversant le moteur électrique (4) et/ou le convertisseur (31) ;
- il est prévu un capteur de couple de rotation (36) sur le moteur électrique (4), lequel est connecté au dispositif de commande (10) et est en particulier conçu pour déterminer le couple de rotation réel du moteur électrique (4) ;
- il est prévu un capteur de température (37) dans le circuit hydraulique de direction (19), lequel est connecté au dispositif de commande (10) et est en particulier conçu pour déterminer une température réelle du circuit hydraulique de direction (19) ;
- le dispositif de commande (10) est conçu pour déterminer une valeur de consigne d'un paramètre de fonctionnement, ainsi qu'une vitesse de rotation de consigne du moteur électrique (4) ou un paramètre corrélé à la vitesse de déplacement de consigne de l'engin de compactage (1), en particulier à partir du réglage d'un élément de manœuvre de l'engin de compactage (1) ;
- le dispositif de commande (10) est également conçu pour générer un couple de freinage au niveau de la pompe d'alimentation de direction (13) via l'étrangleur hydraulique (18) si la vitesse de rotation réelle et/ou le paramètre corrélé à la vitesse de déplacement réelle est supérieur à la vitesse de rotation de consigne et/ou au paramètre corrélé à la vitesse de déplacement de consigne ;
- un conduit de retour du circuit hydraulique de direction (19) et un conduit de retour du circuit hydraulique de déplacement (16) sont conçus de manière à déboucher conjointement dans un réservoir (15) ;
- un accumulateur hydraulique (50) est relié au circuit hydraulique de direction (19) par l'intermédiaire d'une vanne de chargement d'accumulateur (51).

16. Engin de compactage (1) selon l'une des revendications précédentes 14 ou 15,
**caractérisé en ce que**
il présente au moins l'une des caractéristiques suivantes :
- il comprend un dispositif de déplacement (52) entraîné par un moteur hydraulique, en particulier directement via un arbre, et une pompe hydraulique de freinage (54) du circuit hydraulique de freinage (53) couplée mécaniquement audit moteur hydraulique, en particulier via un étage de transmission ;
- il comprend un dispositif de déplacement (52) entraîné par un moteur électrique, en particulier directement via un arbre, et un mécanisme de couplage permettant de coupler mécaniquement le moteur électrique à une pompe hydraulique de freinage d'un circuit hydraulique de freinage, le circuit hydraulique de freinage comprenant l'étrangleur hydraulique (8), disposé en particulier en aval de la pompe hydraulique de freinage.

17. Engin de compactage (1) selon l'une des revendications précédentes 14, 15 ou 16,
**caractérisé en ce que**
chacun des dispositifs de déplacement (52), en particulier chacun des cylindres de compactage (9), possède son propre circuit hydraulique de freinage séparément, et présente en outre au moins l'une des caractéristiques suivantes :
- un accumulateur hydraulique séparé est associé à chaque circuit hydraulique de freinage ;
- il est prévu un accumulateur hydraulique commun, lequel est relié à au moins deux circuits hydrauliques de freinage par l'intermédiaire d'un conduit d'alimentation respectif via une vanne de chargement d'accumulateur respective ou via une vanne de chargement d'accumulateur commune ;
- les étrangleurs des deux circuits hydrauliques de freinage peuvent être commandés indépendamment l'un de l'autre, et le dispositif de commande (10) est conçu pour commander les deux étrangleurs indépendamment l'un de l'autre et/ou en tenant compte du sens de déplacement actuel.
